# EUROPEAN PATENT APPLICATION

(11) **EP 4 750 166 A1**
(43) Date of publication of application: **27.05.2026**
(21) Application number: 23946097.5
(22) Date of filing: 21.07.2023
(51) Int. Cl.: H04W 52/02

(54) **COMMUNICATION METHOD AND APPARATUS FOR BROADCAST FRAME, AND DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZHANG, Jinyu, Dongguan, Guangdong 523860 (CN); CUI, Shengjiang, Dongguan, Guangdong 523860 (CN)
(74) Representative: Novagraaf Technologies
(86) International application number: PCT/CN2023/108735
(87) International publication number: WO 2025/020003

(57) **Abstract**

The present application belongs to the field of zero power consumption. Disclosed are a communication method and apparatus for a broadcast frame, and a device, a medium and a program product. The method is executed by a zero-power-consumption device, and the method comprises: receiving a first broadcast frame, wherein the first broadcast frame is a broadcast frame that is sent at a different time-domain position from a second broadcast frame, which is periodically sent. By means of the method, a first broadcast frame is received, wherein the first broadcast frame is a broadcast frame that is sent at a different time-domain position from a second broadcast frame, which is periodically sent, so as to facilitate a zero-power-con-sumption device in completing time-frequency synchronization and obtaining system information, thereby accelerating a communication process between a network device and the zero-power-consumption device, shortening the waiting time of the zero-power-consumption device to receive the broadcast frame, and thus reducing the power consumption of the zero-power-consumption device.

## Description

### TECHNICAL FIELD

The present disclosure relates to the zero-power field, and in particular, to a method and apparatus for communicating broadcast frames, and a device, a medium, and a program product thereof.

### RELATED ART

A network device in a wireless fidelity (Wi-Fi) system or a cellular communication system transmits broadcast frames to a terminal device. The terminal device performs time-frequency synchronization and system configuration based on the broadcast frames.

In zero-power Internet of things (IoT), an IoT device performs time-frequency synchronization and system configuration in response to receiving the broadcast frame from the network device. Because the IoT device needs to sleep and the broadcast frame is periodically transmitted, the IoT device fails to complete synchronization within a short time in a case where a long interval is present between a wake-up time of the IoT device and a transmission time of a next broadcast frame. This leads to increased service latency, and increases device power consumption as the device is forced to remain awake while waiting.

### SUMMARY

The present disclosure provides a method and apparatus for communicating broadcast frames, and a device, a medium, and a program product thereof. The technical solutions at least include the following contents.

According to an aspect of the embodiments of the present disclosure, a method for communicating broadcast frames is provided. The method is performed by a zero-power device. The method includes: receiving a first broadcast frame, wherein the first broadcast frame is transmitted at a time-domain position different from that of a periodically transmitted second broadcast frame.

According to another aspect of the embodiments of the present disclosure, a method for communicating broadcast frames is provided. The method is performed by a network device. The method includes: transmitting a first broadcast frame, wherein the first broadcast frame is transmitted at a time-domain position different from that of a periodically transmitted second broadcast frame.

According to another aspect of the embodiments of the present disclosure, an apparatus for communicating broadcast frames is provided. The apparatus includes: a receiving module, configured to receive a first broadcast frame, wherein the first broadcast frame is transmitted at a time-domain position different from that of a periodically transmitted second broadcast frame.

According to another aspect of the embodiments of the present disclosure, an apparatus for communicating broadcast frames is provided. The apparatus includes: a transmitting module, configured to transmit a first broadcast frame, wherein the first broadcast frame is transmitted at a time-domain position different from that of a periodically transmitted second broadcast frame.

According to another aspect of the embodiments of the present disclosure, a zero-power device is provided. The zero-power device includes: a processor; a transceiver communicably connected to the processor; and a memory configured to store one or more instructions executable by the processor. The processor is configured to load and execute the one or more instructions to perform the method for communicating broadcast frames as described in the foregoing aspects.

According to another aspect of the embodiments of the present disclosure, a network device is provided. The network device includes: a processor; a transceiver communicably connected to the processor; and a memory configured to store one or more instructions executable by the processor. The processor is configured to load and execute the one or more instructions to perform the method for communicating broadcast frames as defined in the foregoing aspects.

According to another aspect of the embodiments of the present disclosure, a computer-readable storage medium is provided. The computer-readable storage medium stores at least one program. The at least one program is loaded and run by a processor to perform the method for communicating broadcast frames as described in the foregoing aspects.

According to another aspect of the embodiments of the present disclosure, a computer program product or computer program is provided. The computer program product or computer program includes one or more computer instructions. The one or more computer instructions are stored in a computer-readable storage medium. The one or more computer instructions, when load from the computer-readable storage medium and executed by a processor, cause the processor to perform the method for communicating broadcast frames as described in the foregoing aspects.

The technical solutions according to the embodiments of the present disclosure have the following beneficial effects.

The first broadcast frame is received. The first broadcast frame is transmitted at a time-domain position different from that of the periodically transmitted second broadcast frame. Even if a long interval is present between a wake-up time of an IoT device and a transmission time of a next second broadcast frame, because the first broadcast frame has a time position close to a wake-up time of the zero-power device, the first broadcast frame helps the zero-power device to quickly complete time-frequency synchronization and acquire system information, such that a communication process between the network device and the zero-power device is accelerated, a waiting time for the zero-power device to receive the second broadcast frame is reduced, and power consumption of the zero-power device is reduced.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a schematic diagram of a zero-power communication system according to some embodiments of the present disclosure;
FIG. 2 is a schematic diagram of radio frequency (RF) energy harvesting according to the related art;
FIG. 3 is a schematic diagram of a backscattering communication process according to the related art;
FIG. 4 is a schematic diagram of resistive load modulation according to the related art;
FIG. 5 is a schematic diagram of a coding scheme according to the related art;
FIG. 6 is a schematic diagram of searching for a beacon frame by a zero-power device according to some embodiments of the present disclosure;
FIG. 7 is a flowchart of a method for communicating broadcast frames according to some embodiments of the present disclosure;
FIG. 8 is a flowchart of a method for communicating broadcast frames according to some embodiments of the present disclosure;
FIG. 9 is a flowchart of a method for communicating broadcast frames according to some embodiments of the present disclosure;
FIG. 10 is a schematic diagram of transmitting a first broadcast frame and a second broadcast frame according to some embodiments of the present disclosure;
FIG. 11 is a schematic diagram of transmitting a first broadcast frame and a second broadcast frame according to some embodiments of the present disclosure;
FIG. 12 is a schematic diagram of transmitting a first broadcast frame and a second broadcast frame according to some embodiments of the present disclosure;
FIG. 13 is a flowchart of a method for communicating broadcast frames according to some embodiments of the present disclosure;
FIG. 14 is a schematic diagram of a structure format of a beacon frame according to some embodiments of the present disclosure;
FIG. 15 is a schematic diagram of a structure format of a beacon frame according to some embodiments of the present disclosure;
FIG. 16 is a flowchart of a method for communicating broadcast frames according to some embodiments of the present disclosure;
FIG. 17 is a flowchart of a method for communicating broadcast frames according to some embodiments of the present disclosure;
FIG. 18 is a block diagram of an apparatus for communicating broadcast frames according to some embodiments of the present disclosure;
FIG. 19 is a block diagram of an apparatus for communicating broadcast frames according to some embodiments of the present disclosure; and
FIG. 20 is a schematic structural diagram of a zero-power device or network device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, such information should not be limited to these terms. These terms are only used to distinguish one type of information from another. For example, first information may also be referred to as second information, and similarly, second information is also referred to as first information, without departing from the scope of the present disclosure. The word "if," as used herein, may be interpreted as "in a case where," " in a case when," or "in response to determining that," depending on the context.

The technical solutions according to some embodiments of the present disclosure are applicable to various communication systems, such as a global system of mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, a cellular IoT system, a cellular passive IoT system, a future evolved system of a 5G NR system, or 6^{th} generation (6G) system and a future evolved system thereof.

It is understandable that, in the embodiments of the present disclosure, "5G" may also be referred to as "5G NR" or "NR".

It is understandable that, in the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

In the embodiments of the present disclosure, the term "predefined" may be implemented by pre-storing a corresponding code, a corresponding table, or another method that may be used to indicate relevant information in a device (such as a terminal device or a network device), and a specific implementation thereof is not limited in the present disclosure. For example, the term "predefined" may be "defined" in a protocol.

In the embodiments of the present disclosure, the "protocol" may be a standard protocol in the field of communication, and for example, may include an LTE protocol, an NR protocol, and a related protocol applicable to a future communication system, which is not limited in the present disclosure.

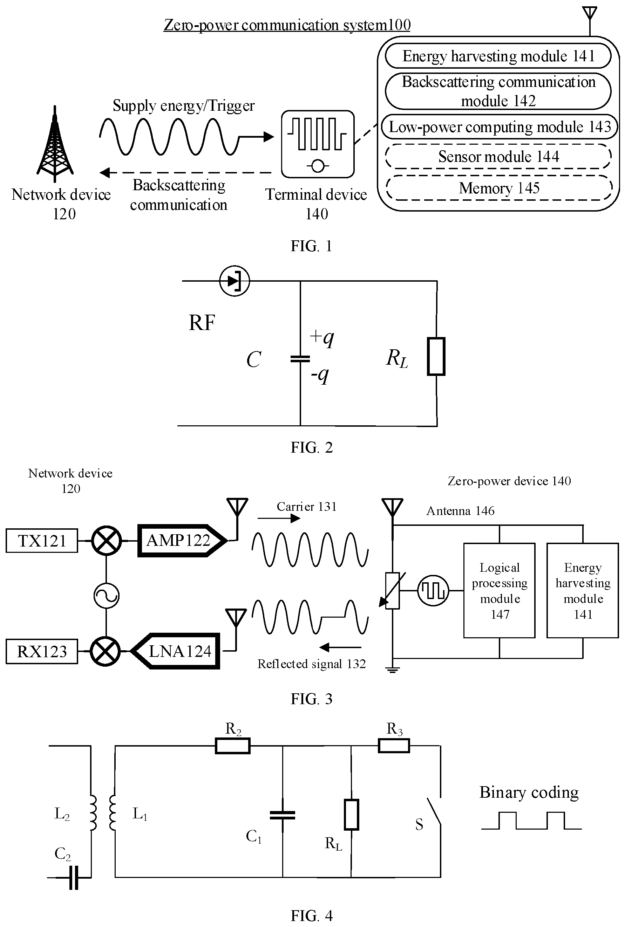

FIG. 1 illustrates a schematic diagram of a zero-power communication system 100 according to some embodiments of the present disclosure. The zero-power communication system 100 includes a network device 120 and a zero-power device 140.

The network device 120 is used to transmit a wireless energy supply signal and a downlink communication signal to the zero-power device 140 and receive a backscattering signal from the zero-power device 140. The zero-power device 140 is also referred to as an ambient power enabled IoT (ambient IoT) device. The zero-power terminal 140 includes an energy harvesting module 141, a backscattering communication module 142, and a low-power computing module 143. The energy harvesting module 141 may harvest energy carried by radio waves in space for driving the low-power computing module 143 of the zero-power device 140 and implement backscattering communication. Upon acquiring the energy, the zero-power device 140 may receive control signaling from the network device 120 and transmit data to the network device 120 by backscattering based on the control signaling. The transmitted data may be from data stored in the zero-power device 140 (e.g., identity or pre-written information, such as production date, brand, and manufacturer).

The zero-power device 140 may further include a sensor module 144 and a memory 145. The sensor module 144 may include various sensors. The zero-power device 140 may report, based on a zero-power mechanism, data collected by the various sensors. The memory 145 is used to store some basic information (such as item identifiers) or acquire sensing data, such as ambient temperature and ambient humidity.

The zero-power device 140 does not need any battery, and simple signal demodulation, decoding or coding, modulation, and other simple operations may be implemented using the low-power computing module 143. Therefore, a zero-power module only requires a simple hardware design, thereby lowering the cost and reducing the size of the zero-power device 140.

The network device 120 includes, but is not limited to, a cellular network device such as a 5G/6G network device and a base station device, and a Wi-Fi/WLAN network device such as an access point (AP), a router, and a mobile AP. The mobile AP may be a phone.

The zero-power device 140 includes, but is not limited to, a handheld device, a wearable device, an in-vehicle device, an IoT device, or the like. The zero-power device 140 may be at least one of a phone, a tablet computer, an e-book reader, a laptop computer, a desktop computer, a television, a game console, an augmented reality (AR) terminal, a virtual reality (VR) terminal, a mixed reality (MR) terminal, a wearable device, a handle, an electronic tag, a controller, or the like.

**In the following, key technologies of zero-power communication are introduced.**

### •RF power harvesting

FIG. 2 is a schematic diagram of RF power harvesting in the related art. The RF power harvesting is to harvest, based on the principle of electromagnetic induction, spatial electromagnetic wave energy using an RF module by electromagnetic induction and connection to a capacitor C and a load resistor R_{L} that are connected in parallel to acquire energy required to drive the zero-power device to operate, for example, driving a low-power demodulation module, a modulation module, a sensor, and memory reading. Therefore, the zero-power terminal does not need any traditional battery.

### •Backscattering communication

FIG. 3 is a schematic diagram of a backscattering communication process in the related art. The zero-power device 140 receives a wireless signal carrier 131 from a transmit (TX) module 121 of the network device 120 by using a amplifier (AMP) 122, modulates the wireless signal carrier 131, loads to-be-transmitted information using a logic processing module 147, and harvests RF energy using the energy harvesting module 141. The zero-power device 140 radiates a modulated reflected signal 132 using an antenna 146. This information transmission process is referred to as backscattering communication. A receive (RX) module 123 of the network device 120 receives the modulated reflected signal 132 using a low-noise amplifier (LNA) 124. Backscattering and load modulation functions are inseparable. Load modulation is a process of completing modulation by adjusting and controlling circuit parameters of an oscillation circuit of the zero-power device 140 based on rhythms of data streams to cause parameters such as impedance of electronic tags to change accordingly.

The load modulation technology mainly includes resistive load modulation and capacitive load modulation. FIG. 4 is a schematic diagram of resistive load modulation in the related art. In the resistive load modulation, the load resistor R_{L} is connected in parallel to a third resistor R₃, a switch S is turned on or turned off based on binary-coded control, turn-on or turn-off of the third resistor R₃ may cause a change of voltage on a circuit, the load resistor R_{L} is connected in parallel to a first capacitor C₁, the load resistor R_{L} is connected in series to a second resistor R₂, and the second resistor R₂ is connected in series to a first inductor L₁. The first inductor L₁ is coupled to a second inductor L₂, and the second inductor L₂ is connected in series to a second capacitor C₂. In this way, amplitude shift keying (ASK) may be implemented. That is, signal modulation and signal transmission are implemented by adjusting an amplitude of the backscattering signal from the zero-power terminal. Similarly, in the capacitive load modulation, a resonant frequency of a circuit may be changed based on turn-on or turn-off of a capacitor, such that frequency shift keying (FSK) is implemented. That is, signal modulation and signal transmission are implemented by adjusting an operating frequency of the backscattering signal from the zero-power terminal.

The zero-power terminal carries out information modulation on an incoming signal by load modulation, such that the backscattering communication process is implemented. The zero-power terminal has the following significant advantages: the terminal does not actively transmit any signal, and no complex RF link, such as a power amplifier (PA) and an RF filter in the RF link, is required; the terminal is not required to actively generate any high-frequency signal, and thus a high-frequency crystal oscillator is not required; and the terminal carries out signal transmission by backscattering communication, without consuming energy of the terminal.

### •Ultra-low-power active transmission technique

A zero-power device may also adopt an ultra-low-power active transmission technique. Different from the backscattering transmission, when transmitting data using the ultra-low-power active transmission technique, the zero-power device needs to use a relatively simple and low-power oscillator to generate RF carriers, and then modulates to-be-transmitted information onto the RF carriers. Based on current research, the power consumption of an ultra-low-power active transmitter may be as low as several hundred microwatts, and thus the ultra-low-power active transmitter can achieve ultra-low-power data transmission.

**A coding scheme of zero-power communication is introduced hereinafter.**

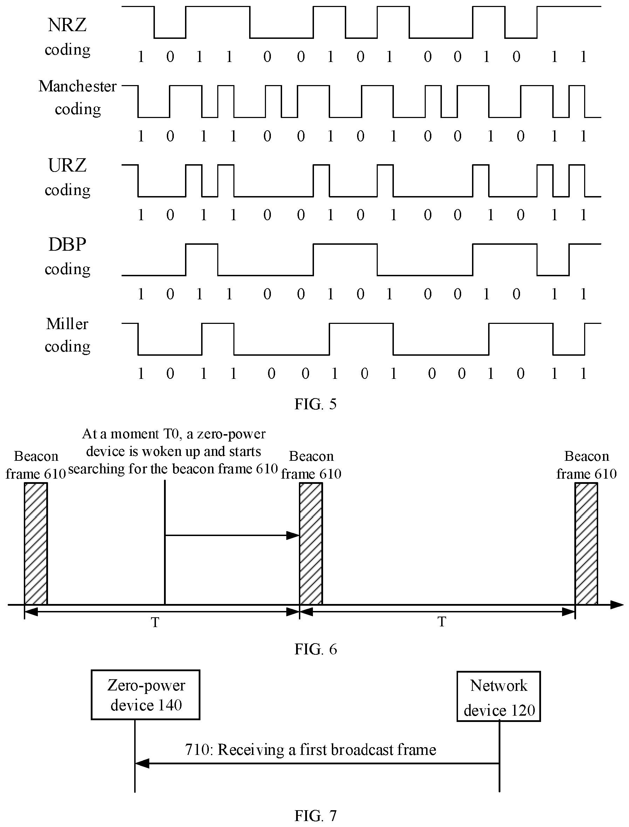

FIG. 5 is a schematic diagram of a coding scheme in the related art. For data transmitted by electronic tags, binary "1" and binary "0" may be represented using different forms of codes. A radio frequency identification (RFID) system generally adopts one of: non-return-to-zero (NRZ) coding, Manchester coding, unipolar return-to-zero (URZ) coding, differential binary phase (DBP) coding, Miller coding, or differential coding. That is, 0 and 1 may be represented using different pulse signals.
- In NRZ coding, binary "1" is represented by a high level, and binary "0" is represented by a low level. NRZ coding in FIG. 5 is a schematic diagram of levels of binary data 101100101001011 encoded by NRZ coding.
- Manchester coding is also referred to as split-phase coding. In Manchester coding, a binary value is represented by a change (rise or fall) in a level in a half bit cycle within a bit length. A negative transition in a half bit cycle represents binary "1", and a positive transition in a half bit cycle represents binary "0". An error in data transmission means that when data bits transmitted by a plurality of electronic tags at the same time have different values, received rising and falling edges offset each other, resulting in an uninterrupted carrier signal throughout the entire bit length. In Manchester coding, it is impossible that a state without a change is present within the bit length. A reader/writer may determine, using the error, a specific location where a collision occurs. Manchester coding helps detect data transmission errors, and the Manchester coding is generally used for data transmission from the electronic tags to the reader/writer when load modulation or backscattering modulation of carriers is adopted. Manchester coding in FIG. 5 is a schematic diagram of levels of binary data 101100101001011 encoded by Manchester coding.
- In URZ coding, binary "1" is represented by a high level in a first half bit cycle of URZ coding, and binary "1" is represented by a low-level signal that lasts for an entire bit cycle. URZ coding in FIG. 5 is a schematic diagram of levels of binary data 101100101001011 encoded by URZ coding.
- In DBP coding, binary "0" is represented by any edge in a half bit cycle, and binary "1" is represented by no edge. In addition, levels are inverted at the beginning of each bit cycle. It is relatively easy for the receiver to reconstruct a bit beat. DBP coding in FIG. 5 is a schematic diagram of levels of binary data 101100101001011 encoded by DBP coding.
- In Miller coding, binary "1" is represented by any edge in a half bit cycle, and binary "0" is represented by a constant level in a next bit cycle. Level alternation occurs at the beginning of a bit cycle. It is relatively easy for the receiver to reconstruct a bit beat. Miller coding in FIG. 5 is a schematic diagram of levels of binary data 101100101001011 encoded by Miller coding.
- In differential coding, each binary "1" to be transmitted may cause a change in signal level, while for binary "0", the signal level remains the same.

**Classifications of zero-power devices are introduced hereinafter.**

Based on energy sources and usage modes of the zero-power devices, the zero-power devices may be classified into the following types.

### •Passive zero-power device

The zero-power device does not need a built-in battery. In a case where the zero-power device is close to a network device, the zero-power device is within a near field range formed by antenna radiation of the network device. In some embodiments, the network device is a reader/writer of the RFID system. Therefore, an antenna of the zero-power device generates an induced current by electromagnetic induction, and the induced current drives a low-power chip circuit of the zero-power device. Demodulation of a forward link signal and modulation of a backward link signal are implemented. For a backscattering link, the zero-power device carries out signal transmission by backscattering or ultra-low-power active transmission. The passive zero-power device does not need a built-in battery to drive either for the forward link or a reverse link, and is a true zero-power device. The passive zero-power device does not need any battery, in which an RF circuit and a baseband circuit are very simple. For example, the passive zero-power device does not need devices such as an LNA, a PA, a crystal oscillator, and an analog-to-digital converter (ADC), and has many advantages such as small size, light weight, very low price, and long service life.

### •Semi-passive zero-power device

The semi-passive zero-power device is not provided with any conventional battery, and may harvest radio wave energy by an RF energy harvesting module, and at the same time, store the harvested energy in an energy storage unit. In some embodiments, the energy storage unit is a capacitor. Upon acquiring the energy, the energy storage unit may drive a low-power chip circuit of the zero-power device. Demodulation of a forward link signal and modulation of a backward link signal are implemented. For a backscattering link, the zero-power device carries out signal transmission by backscattering or ultra-low-power active transmission.

The semi-passive zero-power device does not need any built-in battery to drive either for the forward link or a reverse link, and in operation, uses energy stored in the capacitor that is from radio energy harvested by the RF energy harvesting module, which is a true zero-power device. The semi-passive zero-power device inherits many advantages of the passive zero-power device, such as small size, light weight, very low price, and long service life.

### •Active zero-power device

The zero-power device used in some scenarios is an active zero-power device. The active zero-power device may be provided with a built-in battery. The battery is configured to drive a low-power chip circuit of the zero-power device. Demodulation of a forward link signal and modulation of a backward link signal are implemented. However, for a backscattering link, the zero-power device carries out signal transmission by backscattering or ultra-low-power active transmission. Therefore, zero power of the active zero-power device is mainly reflected in the fact that signal transmission in the reverse link does not consume the power of the zero-power device itself but uses backscattering. In the active zero-power device, the built-in battery supplies power to an RFID chip, and thus a reading/writing distance of a tag is increased and reliability of communication is improved. Therefore, the active zero-power device is applicable to some scenarios where relatively high requirements are put forward for a communication distance and a read latency.

**Classifications of zero-power devices are introduced below based on the type of the transmitter.**

### (1) Zero-power device based on backscattering

Such a zero-power device carries out uplink data transmission by backscattering as described above. Such a zero-power device does not have an active transmitter for active transmission but only has a transmitter for backscattering. Therefore, when carrying out uplink data transmission, such a zero-power device needs a network device to provide carriers, and implement backscattering based on the carriers to implement uplink data transmission.

### (2) Zero-power device based on an active transmitter

Such a zero-power device has an active transmitter with an active transmission capability for active transmission, and when carrying out uplink data transmission, such a zero-power device can transmit data using its own active transmitter, and does not need a network device to provide carriers. An active transmitter applicable to a zero-power device may be an ultra-low-power ASK transmitter, an ultra-low-power FSK transmitter, or the like. Based on current implementations, the overall power consumption of such transmitters can be reduced to 400 microwatts to 600 microwatts in a case where a 100-microwatt signal is transmitted.

### (3) Zero-power device based on both backscattering and an active transmitter

Such a zero-power device supports both reverse scattering and an active transmitter. The zero-power device determines whether to perform backscattering or perform active transmission using an active transmitter based on different situations (such as different power levels and different available environment energy sources) or based on the scheduling of a network device.

**A cellular IoT is introduced below.**

The cellular IoT is booming. For example, IoT technologies, such as narrow band-IoT (NB-IoT), machine-type communications (MTC) and RedCap, have been standardized in the 3^{rd} Generation Partnership Project (3GPP). However, the IoT communication needs cannot be met yet in many scenarios.

### •Strict communication environment

In some IoT scenarios, extreme environment such as high temperature, extremely low temperature, high humidity, high voltage, high radiation, or high-speed movement may occur. Such scenarios include ultra-high voltage transformer substations, high-speed train track monitoring, environmental monitoring in extremely cold regions, industrial production lines, and the like. In these scenarios, existing IoT terminal devices cannot operate due to the operating environment restrictions of conventional power supplies. In addition, extreme operating environment are not conducive to the maintenance of IoT terminal devices, e.g., battery replacement.

### •Needs for ultra-small size of terminals

In some IoT scenarios, such as food traceability, commodity circulation, and smart wearables, a terminal needs to have an ultra-small size for convenient use in these scenarios. For example, an IoT terminal device used for commodity management in a circulation process is usually in the form of an electronic tag, and the IoT terminal device is embedded in commodity packaging in a very compact form. For another example, a lightweight wearable IoT terminal device improve user experience while meeting user needs.

### •Needs for ultra-low-cost IoT communication

In numerous IoT communication scenarios, an IoT terminal devices needs to have sufficiently low cost so as to enhance its competitiveness relative to other alternative techniques. For example, in logistics or warehousing scenarios, to facilitate the management of a large volume of items in circulation, an IoT terminal device is attached to each item, thereby achieving precise management of the entire logistics process and lifecycle by means of the communication between the IoT terminal device and a logistics network. In these scenarios, the IoT terminal device needs to have a very competitive price.

Therefore, to meet these IoT communication needs that have not been met yet, an IoT that has ultra-low cost and an ultra-small size and is battery-free/maintenance-free needs to be developed in the cellular IoT, and the zero-power IoT can perfectly meet these needs.

A zero-power IoT is also referred to as an ambient IoT or a passive IoT. The ambient IoT device uses various environmental energies such as RF energy, optical energy, solar energy, thermal energy, and mechanical energy to drive the ambient IoT device itself. The ambient IoT device may have no energy storage capability or only have a very limited energy storage capability (e.g., using a capacitor with a capacity of tens of microfarads). Compared with an existing IoT device, the ambient IoT device has many advantages, for example, the ambient IoT is conventional battery-free, maintenance-free, small in size, low in complexity, low in cost, and has a long service life.

A zero-power IoT is at least applicable to the following four scenarios.
(1) Object identification, such as logistics management, management of production line products, and supply chain management.
(2) Environmental monitoring, such as monitoring of temperature, humidity, and harmful gases in operating environment and natural environment.
(3) Positioning, such as indoor positioning, intelligent object tracking, and positioning of production line items.
(4) Intelligent control, such as intelligent control of various appliances in smart homes (turning on/off air conditioners and adjusting temperature) and intelligent control of various facilities in agricultural greenhouses (automatic irrigation and fertilization).

In a future cellular passive IoT or WLAN passive IoT, or an ambient IoT, new types of ambient IoT devices may be supported to meet corresponding types of IoT communication requirements in different application scenarios. The ambient IoT devices are battery-free and feature extremely simple radio frequency circuits and baseband circuits. For example, components such as low-noise amplifiers (LNAs), power amplifiers (PAs), crystal oscillators, and analog-to-digital converters (ADCs) are not needed. Therefore, the ambient IoT device has many advantages such as a small volume, a light weight, an extremely low price, a long service life, and maintenance-free.

Ambient IoT devices may be used in the following two scenarios.

### (1) Item search:

The ambient IoT device may be attached to personal items such as a passport and an identification (ID) card. When people find these items missing, they may use a router or smartphone to transmit wireless signals to the ambient IoT devices attached to the personal items (for example, an item search application is installed on the phone, and an item search function may be enabled through the application). The ambient IoT devices start working upon harvesting sufficient energy.

In this case, the router or smartphone may deploy a Wi-Fi network. The ambient IoT devices quickly access the Wi-Fi network and communicate with the Wi-Fi network, such that the router or smartphone acquires at least one of identity or location information of the ambient IoT device. In this way, item search can be implemented.

### (2) Rapid item identification and stocktaking:

In logistics scenarios, ambient IoT devices may be attached to item packages or containers. When logistics items arrive at a logistics station, the logistics station needs to perform rapid inbound stocktaking. Similarly, rapid outbound stocktaking is needed during outbound processing.

During inbound or outbound processing (proximity of a logistics vehicle may be detected using a third-party technology, such as infrared or ultrasonic waves), a router or smartphone may be used to transmit wireless signals to ambient IoT devices on the logistics items. The ambient IoT devices start working upon harvesting sufficient energy. In this case, the router or smartphone may deploy a Wi-Fi network. The ambient IoT devices quickly access the Wi-Fi network and communicate with the Wi-Fi network, such that the router or smartphone acquires at least one of identity of the ambient IoT device. In this way, rapid item identification and stocktaking can be implemented.

In the foregoing application cases of ambient IoT device, the ambient IoT device switch from a zero-power state to a working state in response to receiving a wireless signal from a network. How to achieve rapid synchronization with the network and quickly acquire configuration information of the network in this process is an urgent problem to be addressed. In a current WLAN system, a network device transmits a beacon frame. A zero-power device synchronizes with a network based on the beacon frame and reads system information carried by the beacon frame (such as capabilities of the network and system configuration parameters). As illustrated in FIG. 6, a beacon frame 610 is periodically transmitted based on a period T. At a moment T0, a zero-power device (an ambient IoT device) is woken up, enters a working state, and starts searching for a 1^{st} beacon frame 610 received subsequent to being woken up.

However, in the related art, a beacon frame is usually transmitted periodically. For an ambient IoT device, an excessively long transmission period of the beacon frame leads to an excessively long time for the ambient IoT device to synchronize with a network and acquire system information, such that service latency and a time for the ambient IoT device to search for the beacon frame are increased, thereby increasing power consumption of the ambient IoT device. However, an excessively short transmission period of the beacon frame results in excessive beacon frames and thus high system overheads.

In view of the foregoing problem, the embodiments of the present disclosure provide a method for communicating broadcast frames. FIG. 7 is a flowchart of a method for communicating broadcast frames according to some embodiments of the present disclosure. The method is performed by a zero-power device 140 and a network device 120. The method includes the following process.

**In process 710,** the zero-power device 140 receives a first broadcast frame.

In some embodiments, the first broadcast frame is transmitted at a time-domain position different from that of a periodically transmitted second broadcast frame, which may be understood as that the first broadcast frame is a supplementary or additional broadcast frame transmitted at a time-domain position different from that of the periodically transmitted second broadcast frame.

In some embodiments, the first broadcast frame is transmitted between periodically transmitted second broadcast frames; and/or the first broadcast frame is transmitted prior to a 1^{st} second broadcast frame; and/or the first broadcast frame is transmitted subsequent to a last second broadcast frame.

In some embodiments, the first broadcast frame is transmitted at a first time-domain position, and the periodic second broadcast frame is transmitted at a second time-domain position. The first time-domain position is different from the second time-domain position.

In some embodiments, the network device 120 aperiodically transmits the first broadcast frame or periodically transmits the first broadcast frame. The first broadcast frame is used for at least one of the following functions of the zero-power device 140: performing time-frequency synchronization with a wireless network, acquiring system information, acquiring energy for power supply, or acquiring scheduling information. The time-frequency synchronization includes at least one of time-domain synchronization or frequency-domain synchronization.

In some embodiments, the first broadcast frame is transmitted within a specified search space. The search space may be set dedicatedly for the zero-power device. The zero-power device listens for the first broadcast frame within the specified search space. In some embodiments, the first broadcast frame is transmitted within a specified resource pool, wherein the resource pool may be set dedicatedly for the zero-power device.

In some embodiments, the wireless network is a Wi-Fi/WLAN network. The first broadcast frame is a first beacon frame, wherein the first beacon frame is used for at least one of the following functions of the zero-power device 140: performing time-frequency synchronization with the wireless network, acquiring the system information, acquiring the energy for power supply, or acquiring the scheduling information.

In some embodiments, the wireless network is a cellular communication network. The first broadcast frame is a broadcast frame configured to carry at least one of a synchronization signal or the system information. Because the cellular communication network includes a plurality of generations of networks that continuously evolve, the broadcast frame configured to carry at least one of the synchronization signal or the system information may have different names in different cellular communication networks, for example, a synchronization signal/physical broadcast channel block (SSB) in a 5G system and a physical broadcast channel (PBCH) in a 4th-generation (4G) system. The name is not limited in the embodiments of the present disclosure. The first broadcast frame is used as an example for description.

In some embodiments, the first broadcast frame is transmitted by the network device 120 in response to a trigger event. The trigger event is used to indicate that the zero-power device 140 needs to acquire at least one of the synchronization signal or the system information. For example, the trigger event includes at least one of a logistics vehicle arrival event in a logistics scenario or a warehouse stocktaking event in a warehousing scenario.

In the logistics scenario, the network device 120 perceives arrival of a logistics vehicle (for example, through acoustic sensing or motion sensing). When the logistics vehicle arrives, the network device 120 initiates a stocktaking process for items (the zero-power device 140) on the logistics vehicle. In this case, the zero-power device 140 needs to acquire at least one of the synchronization signal or the system information.

In the warehousing scenario, when stocktaking is needed for items in a warehouse, the items (the zero-power device 140) in the warehouse need to acquire at least one of the synchronization signal or the system information.

In some embodiments, the zero-power device 140 receives a wireless signal from the network device 120, and acquires energy by performing energy harvesting on the wireless signal, to switch to a working state. In this case, the zero-power device 140 needs to search for the wireless network provided by the network device 120, establish time-frequency synchronization with the wireless network, and then acquire the system information. For example, the zero-power device 140 rapidly completes time-frequency synchronization and acquires the system information by receiving the first broadcast frame at a proximate time position, to quickly enter the working state.

In some embodiments, at least one first broadcast frame is transmitted within a first time window. The at least one first broadcast frame further carries indication information of the first time window. In a case where a plurality of first broadcast frames are present within the first time window, all or at least one of the plurality of first broadcast frames carry the indication information of the first time window.

In some embodiments, the first time window is represented as: a window start point + a window length.

In some embodiments, the first time-domain position occupied by the first broadcast frame and a remaining time represent a length of the first time window. That is, all or at least one of the first broadcast frames may carry the remaining time of the first time window. For example, each first broadcast frame except the last first broadcast frame carries the remaining time. A remaining time carried by a first broadcast frame is 1000 ms, indicating that the remaining time of the first time window is 1000 ms starting from a time-domain position of the first broadcast frame.

In some embodiments, a current first broadcast frame carries indication information of a time-domain position of a next first broadcast frame. In a case where the indication information is present, the first time window has not ended and the indication information indicates the time-domain position of the next first broadcast frame. In a case where the indication information is not present, the first time window ends subsequent to the time-domain position of the first broadcast frame.

In summary, in the method according to the embodiments of the present disclosure, the first broadcast frame is received, wherein the first broadcast frame is transmitted at a time-domain position different from that of the periodically transmitted second broadcast frame, and the first broadcast frame is used to help the zero-power device to complete time-frequency synchronization and acquire the system information, such that transmission opportunities of the broadcast frame are increased, a time for completing time-frequency synchronization is reduced, a communication process between the network device and the zero-power device is accelerated, and a waiting time for the zero-power device to receive the broadcast frame and power consumption of the zero-power device are reduced.

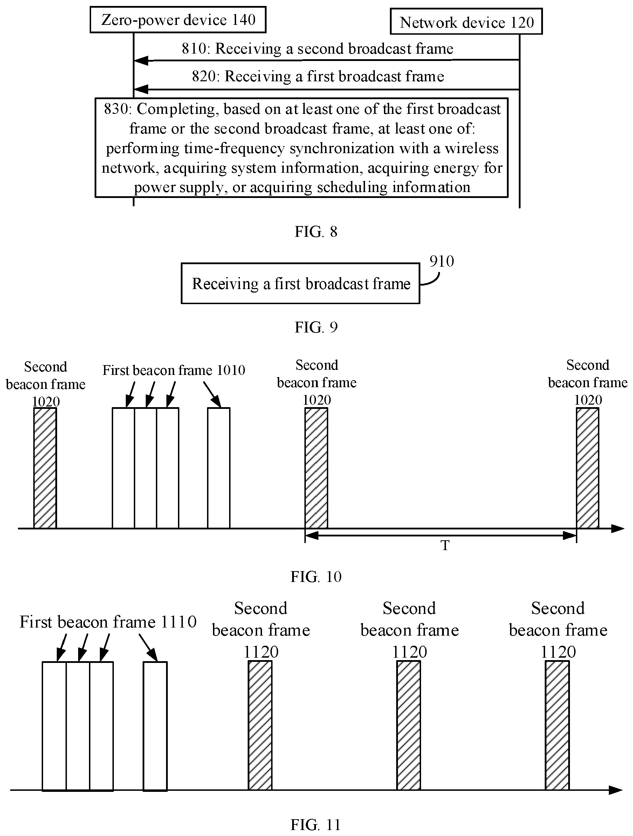

FIG. 8 is a flowchart of a method for communicating broadcast frames according to some embodiments of the present disclosure. The method is performed by a zero-power device 140 and a network device 120. The method includes the following processes.

**In process 810**, the zero-power device 140 receives a second broadcast frame.

In some embodiments, the network device 120 periodically transmits the second broadcast frame. The zero-power device 140 periodically receives the second broadcast frame. The second broadcast frame is used for at least one of the following functions of the zero-power device 140: performing time-frequency synchronization with a wireless network, acquiring system information, acquiring energy for power supply, or acquiring scheduling information. The time-frequency synchronization includes at least one of time-domain synchronization or frequency-domain synchronization.

In some embodiments, the wireless network is a Wi-Fi/WLAN network. The second broadcast frame is a second beacon frame. The second beacon frame is used for at least one of the following functions of the zero-power device 140: periodically performing time-frequency synchronization with the wireless network, acquiring the system information, acquiring the energy for power supply, or acquiring the scheduling information.

In some embodiments, the wireless network includes a cellular communication network. The second broadcast frame is a frame configured to carry a synchronization signal and the system information. Because the cellular communication network includes a plurality of generations of networks that continuously evolve, an information structure configured to carry a synchronization signal and system information may have different names in different cellular communication networks. The name is not limited in the embodiments of the present disclosure.

**In process 820,** the zero-power device 140 receives a first broadcast frame.

In some embodiments, the first broadcast frame is transmitted at a time-domain position different from that of the periodically transmitted second broadcast frame, which may further be understood as that the first broadcast frame is a supplementary or additional broadcast frame transmitted at a time-domain position different from that of the periodically transmitted second broadcast frame.

In some embodiments, the network device 120 aperiodically transmits the first broadcast frame or periodically transmits the first broadcast frame.

An execution sequence of processes 820 and 810 is not limited in the embodiments of the present disclosure. For specific implementation details of process 820, reference is made to process 710 in the embodiments in FIG. 7. Details are not elaborated herein any further.

**In process 830,** the zero-power device 140 completes, based on at least one of the first broadcast frame or the second broadcast frame, at least one of: performing time-frequency synchronization with the wireless network, acquiring the system information, acquiring the energy for power supply, or acquiring the scheduling information.

The scheduling information includes scheduling information of a random access resource.

In some embodiments, based solely on the first broadcast frame, time-frequency synchronization is performed based on a synchronization signal in the first broadcast frame, the system information is acquired based on system information carried by the first broadcast frame, the energy for power supply is acquired based on wireless energy carried by the first broadcast frame, and the scheduling information is acquired based on scheduling information carried by the first broadcast frame.

In some embodiments, based solely on the second broadcast frame, time-frequency synchronization is performed based on a synchronization signal in the second broadcast frame, the system information is acquired based on system information carried by the second broadcast frame, the energy for power supply is acquired based on wireless energy carried by the second broadcast frame, and the scheduling information is acquired based on scheduling information carried by the second broadcast frame.

In some embodiments, in a case where the first broadcast frame is received prior to the second broadcast frame, at least one function is performed based on the first broadcast frame and the other functions are performed based on the second broadcast frame. For example, time-frequency synchronization is performed based on a synchronization signal in the first broadcast frame, the system information is acquired based on system information carried by the first broadcast frame, the energy for power supply is acquired based on wireless energy carried by the first broadcast frame, and the scheduling information is acquired based on scheduling information carried by the second broadcast frame.

In some embodiments, in a case where the second broadcast frame is received prior to the first broadcast frame, at least one function is performed based on the second broadcast frame and the other functions are performed based on the first broadcast frame. For example, time-frequency synchronization is performed based on a synchronization signal in the second broadcast frame, the system information is acquired based on system information carried by the second broadcast frame, the energy for power supply is acquired based on wireless energy carried by the second broadcast frame, and the scheduling information is acquired based on scheduling information carried by the first broadcast frame.

The at least one function is at least one of the following functions mentioned above: performing time-frequency synchronization, acquiring the system information, acquiring the energy for power supply, and acquiring the scheduling information. The other functions are all or at least one of the functions except the at least one function.

In some embodiments, the zero-power device may alternatively complete the foregoing functions based on at least three broadcast frames, which is not limited in the present disclosure. A quantity of first broadcast frames and/or a quantity of second broadcast frames contained in the at least three broadcast frames are/is not limited.

In summary, in the method according to the embodiments of the present disclosure, the first broadcast frame is received, wherein the first broadcast frame is transmitted at a time-domain position different from that of the periodically transmitted second broadcast frame, and the first broadcast frame is used to help the zero-power device to complete time-frequency synchronization and acquire the system information, such that transmission opportunities of the broadcast frame are increased, a time for completing time-frequency synchronization is reduced, a communication process between the network device and the zero-power device is accelerated, and a waiting time for the zero-power device to receive the broadcast frame and power consumption of the zero-power device are reduced.

In the method according to the embodiments of the present disclosure, the periodically transmitted second broadcast frame is further received to periodically complete time-frequency synchronization and update the system information, thereby maintaining stability of the zero-power device.

FIG. 9 is a flowchart of a method for communicating broadcast frames according to some embodiments of the present disclosure. The method is performed by a zero-power device. The method includes the following process.

In process 910, the zero-power device receives a first broadcast frame.

The first broadcast frame is transmitted between periodically transmitted second broadcast frames, and/or prior to a 1^{st} second broadcast frame, and/or subsequent to a last second broadcast frame.

In some embodiments, the first broadcast frame is transmitted at a time-domain position different from that of the periodically transmitted second broadcast frame, which may further be understood as that the first broadcast frame is a supplementary or additional broadcast frame transmitted at a time-domain position different from that of the periodically transmitted second broadcast frame.

In some embodiments, in a case where a network device is a device in a Wi-Fi system, the first broadcast frame is a first beacon frame. The first beacon frame is used by the zero-power device to quickly establish time-frequency synchronization with a network and acquire system information.

In some embodiments, in a case where a network device is a device in a cellular communication system, the first broadcast frame is system broadcast information. The system broadcast information is used to broadcast a synchronization signal and system information, such as an SSB in a 5G system.

In some embodiments, the first broadcast frame is transmitted by a network device. The network device is at least one of a device in a Wi-Fi system or a device in a cellular communication system (or referred to as a mobile communication system).

In some embodiments, the first broadcast frame and the second broadcast frame are received.

The first broadcast frame is a supplementary or additional broadcast frame transmitted by the network device, and the first broadcast frame is aperiodically transmitted or periodically transmitted by the network device. The second broadcast frame is a broadcast frame periodically transmitted by the network device.

In some embodiments, the first broadcast frame is transmitted within a specified search space. The search space may be set dedicatedly for the zero-power device. The zero-power device listens for the first broadcast frame within the specified search space. In some embodiments, the first broadcast frame is transmitted within a specified resource pool, wherein the resource pool may be set dedicatedly for the zero-power device.

The second broadcast frame is a second beacon frame or system broadcast information. The second beacon frame is used by the zero-power device to periodically establish time-frequency synchronization with a network and acquire system information. For example, a period is 100 ms.

The second beacon frame is a periodically transmitted beacon frame, and the second beacon frame may carry information such as capability information and a service set identifier (SSID).

In some embodiments, the second beacon frame includes a preamble portion and a data portion. The preamble portion is used to indicate a start of data transmission and help a receiving device (the zero-power device) to determine a valid data portion. The preamble portion includes a set of specific signals used for clock synchronization between the receiving device (the zero-power device) and a transmitting device (the network device).

In some embodiments, the network device configures at least one of a position for transmitting the first broadcast frame, a quantity of times for transmitting the first broadcast frame, a length of a time window for transmitting the first broadcast frame, or a position for transmitting a next second broadcast frame. The zero-power device receives at least one of the position for transmitting the first broadcast frame, the quantity of times for transmitting the first broadcast frame, the length of the time window for transmitting the first broadcast frame, or the position for transmitting the next second broadcast frame. The position for transmitting the next second broadcast frame may be an absolute time position or an offset position relative to a current first broadcast frame.

In some embodiments, the network device transmits at least one first broadcast frame.

In a case where a signal strength is greater than a first threshold, the network device transmits one first broadcast frame. For example, in a case where a router is nearby, one first broadcast frame can help the zero-power device to complete time-frequency synchronization and acquire all system information. The first threshold is predetermined by a person skilled in the art.

In a case where a signal strength is less than a second threshold, the network device transmits a plurality of first broadcast frames. For example, in a case where a router is far away, a plurality of first broadcast frames are needed to help the zero-power device to complete time-frequency synchronization and acquire all system information. The second threshold is predetermined by a person skilled in the art.

The signal strength may be a signal strength when the zero-power device transmits a signal and/or data to the network device. For example, the first threshold is greater than or equal to the second threshold.

In some embodiments, the first broadcast frame is transmitted via: a periodic transmission or an aperiodic transmission.

In some embodiments, the aperiodic transmission includes at least one of a continuous transmission, a discontinuous transmission, or a burst transmission.

In the continuous transmission, the first broadcast frame is transmitted n times one after another without any interval, wherein n is an integer greater than 1. In the discontinuous transmission, an interval is present between transmissions of the first broadcast frame. The interval may or may not be periodic. In the burst transmission, the first broadcast frame is transmitted at any time, and an interval between two transmissions is usually longer and more random in comparison with the discontinuous transmission.

As illustrated in FIG. 10, the first broadcast frame is a first beacon frame 1010, and the second broadcast frame is a second beacon frame 1020. The network device periodically transmits the second beacon frame 1020 based on a period T, and aperiodically transmits a total of four first beacon frames 1010 between a 1^{st} second beacon frame 1020 and a 2^{nd} second beacon frame 1020, wherein first three first beacon frames 1010 are transmitted via the continuous transmission, and the 4^{th} first beacon frame 1010 is transmitted via the discontinuous transmission.

As illustrated in FIG. 11, the first broadcast frame is a first beacon frame 1110, and the second broadcast frame is a second beacon frame 1120. The network device periodically transmits the second beacon frame 1120, and transmits a total of four first beacon frames 1110 via the burst transmission prior to a 1^{st} second beacon frame 1120, wherein first three first beacon frames 1110 are transmitted via the continuous transmission, and the 4^{th} first beacon frame 1110 is transmitted via the discontinuous transmission.

In some embodiments, the first broadcast frame and the second broadcast frame have an identical structure.

For example, the first broadcast frame is a first beacon frame, and the second broadcast frame is a second beacon frame. The first beacon frame and the second beacon frame have an identical structure: a preamble portion precedes a data portion. The first beacon frame and the second beacon frame have a same preamble portion, and data portions of the first beacon frame and the second beacon frame have same key parameters including a length and a code rate. The first beacon frame and the second beacon frame carry a same type of configuration information, wherein most parameters have same values, and a few parameters have different values. For example, timestamp information varies with time positions at which the two beacon frames are transmitted.

The preamble portion includes a legacy short training field (L-STF), a legacy long training field (L-LTF), and a legacy signal (L-SIG) field. The L-STF contains one specified and unique waveform that is easily detected by the receiving device (the zero-power device). Functions of the L-STF include at least one of packet detection, automatic gain control (AGC), initial frequency offset estimation, or initial time synchronization. The L-LTF also contains one specified and unique waveform, though not identical to that of the L-STF. Functions of the L-LTF include at least one of channel estimation, more accurate frequency offset estimation, or more accurate time synchronization. The L-SIG field contains information such as a transmit rate, a coding scheme, a guard interval, and a length, and the L-SIG field is used to calculate duration of a data packet.

In some embodiments, the first broadcast frame and the second broadcast frame have different structures.

In some embodiments, that the first broadcast frame and the second broadcast frame have different structures includes at least one of the following.
(1) The first broadcast frame and the second broadcast frame use different preambles.
(2) A preamble sequence of the first broadcast frame and a preamble sequence of the second broadcast frame differ in length.
(3) A quantity of information types in a data portion of the first broadcast frame is less than or greater than a quantity of information types in a data portion of the second broadcast frame.
(4) A code rate of a data portion of the first broadcast frame is lower than a code rate of a data portion of the second broadcast frame.

An example in which the first broadcast frame is a first beacon frame and the second broadcast frame is a second beacon frame is used for description.

Through designs (1) and (2), different synchronization performance can be provided. For example, in a case where the preamble sequence of the first beacon frame is longer than that of the second beacon frame, more synchronization signals can be contained, such that a probability and accuracy of identifying the data portion by the zero-power device are improved, thereby providing better synchronization performance.

Through design (3), in a case where the quantity of information types in the data portion of the first beacon frame is less than the quantity of information types in the data portion of the second beacon frame, for example, only information such as a timestamp and a period of the second beacon frame is contained, key information can be quickly transmitted to the zero-power device. A small data portion can also improve a reception probability of the zero-power device. In a case where the quantity of information types in the data portion of the first beacon frame is greater than the quantity of information types in the data portion of the second beacon frame, system information can be directly transmitted to the zero-power device to help the zero-power device to establish time-frequency synchronization.

Through design (4), in a case where the code rate of the data portion of the first beacon frame is lower than the code rate of the data portion of the second beacon frame, a probability that the zero-power device successfully receives the beacon frame can be improved.

In some embodiments, in a Wi-Fi/WLAN system, a period of the second broadcast frame is associated with partial configuration. For example, the second beacon frame may carry a traffic indication map (TIM), wherein the TIM is used to inform the zero-power device whether downlink data needs to be transmitted. A period of the TIM is an integer multiple of the period of the second beacon frame. Each beacon frame has a TIM. The TIM contains one bitmap control field, wherein each bit is mapped to one zero-power device. A value of 1 indicates that the zero-power device corresponding to the bit has downlink data buffered in the network device.

For another example, configuration of a restricted access window (RAW) may be indicated in the second beacon frame. Within the RAW, the zero-power device transmits data with the network device, and the configuration of the RAW is subsequent to the second beacon frame. A key idea of the RAW is to restrict a set of stations that can access a channel and spread their access attempts over a long period of time, thus reducing interference and improving communication reliability and efficiency.

In some embodiments, in a case where the network device transmits both the first broadcast frame and the second broadcast frame, the zero-power device needs to distinguish between them because the following reasons.

First, upon completing time-frequency synchronization and acquiring system information based on either the first broadcast frame or the second broadcast frame, the zero-power device needs to periodically maintain time-frequency synchronization based on the second broadcast frame. Therefore, a position of the second broadcast frame needs to be determined.

Second, new system information, such as the configuration of the RAW, may be transmitted over the second broadcast frame at any time. The zero-power device also needs to acquire the new system information based on the second broadcast frame.

In some embodiments, the first broadcast frame and the second broadcast frame are distinguished by at least one of:
·a type indicator in an information field;
·a preamble; or
·a signal information (SIG) field.

For example, a frame control (FC) field in a beacon media access control (MAC) header is used for type indication. The FC field includes a frame type field, a subtype field, or another field. The frame type field specifies a type of a data frame. The subtype field specifies a more specific subtype of a data frame.

Alternatively, the preamble is used for indication. The first broadcast frame and the second broadcast frame use different preamble sequence designs such that the first broadcast frame and the second broadcast frame are distinguished.

Alternatively, the SIG field (i.e., the L-SIG field) in the preamble is used for indication. The SIG field contains channel state information, such as a signal-to-noise ratio, rate, and frequency. The zero-power device may identify a channel state by decoding and analyzing a signal parameter in the SIG field nad adjust a transmit rate. The first broadcast frame and the second broadcast frame use different bit values in the SIG field such that the first broadcast frame and the second broadcast frame can be distinguished.

In some embodiments, upon being woken up, the zero-power device may first search for the first broadcast frame or the second broadcast frame. The zero-power device completes time-frequency synchronization and acquires system information based on either of the first broadcast frame or the second broadcast frame.

In some embodiments, the first broadcast frame carries time-domain position information of a next second broadcast frame. The time-domain position information may be an absolute time position or an offset position relative to the current first broadcast frame.

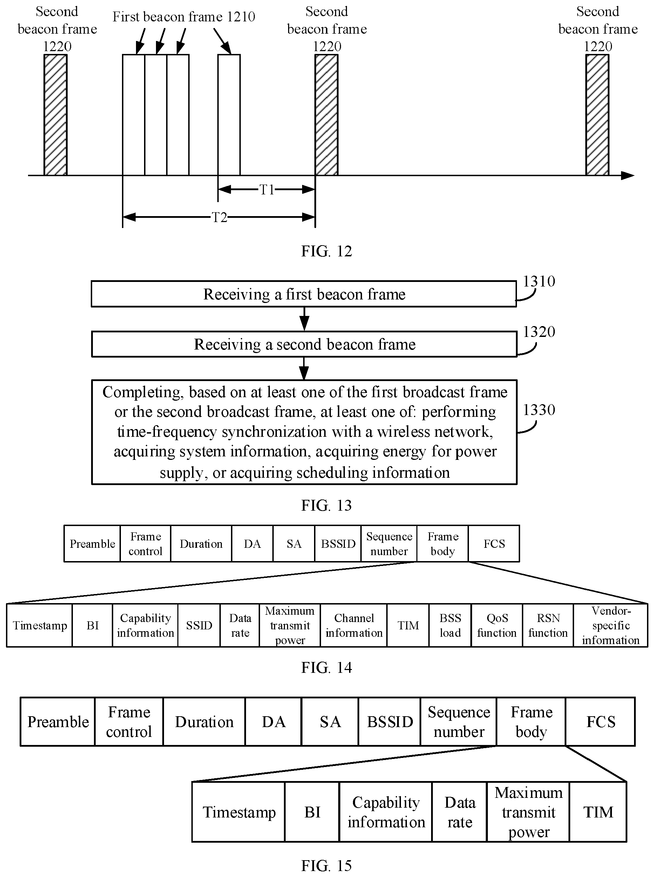

As illustrated in FIG. 12, the first broadcast frame is a first beacon frame 1210, and the second broadcast frame is a second beacon frame 1220. The network device periodically transmits the second beacon frame 1220, and aperiodically transmits a total of four first beacon frames 1210 between a 1^{st} second beacon frame 1220 and a 2^{nd} second beacon frame 1220. Each first beacon frame 1210 carries time-domain position information of a next second beacon frame 1220. For example, the 1^{st} first beacon frame 1210 carries time-domain position information of a next second beacon frame 1220 (i.e., the 2^{nd} second beacon frame 1220), which is a time-domain position after T2 relative to the 1^{st} first beacon frame 1210. The 4^{th} first beacon frame 1210 carries time-domain position information of a next second beacon frame 1220 (i.e., the 2^{nd} second beacon frame 1220), which is a time-domain position after T1 relative to the 4^{th} first beacon frame 1210.

In some embodiments, the first broadcast frame is transmitted by the network device in response to a trigger event.

In some embodiments, the network device triggers transmission of the first broadcast frame based on the trigger event. That is, in a case where the zero-power device needs to complete time-frequency synchronization and acquire system information, for example, in an item search event, the network device may transmit a radio wave to power the zero-power device, and transmit the first broadcast frame and the second broadcast frame to the zero-power device in response to the item search event being triggered. For example, the first broadcast frame is transmitted prior to the second broadcast frame; or the first broadcast frame is transmitted between periodically transmitted second broadcast frames.

In some embodiments, the trigger event includes at least one of:
·an item search event;
·a logistics vehicle arrival event; or
·a warehouse stocktaking event.

For example, in a logistics scenario, the network device perceives arrival of a logistics vehicle (for example, through acoustic sensing or motion sensing). When the logistics vehicle arrives, the network device initiates a stocktaking process for items (the zero-power device) on the logistics vehicle. In this case, the network device may transmit a radio wave to power the zero-power device, and transmit the first broadcast frame and the second broadcast frame to the zero-power device.

Similarly, in a warehousing scenario, when stocktaking is needed for items (the zero-power device) in a warehouse, the network device may transmit a radio wave to power the zero-power device, and transmit the first broadcast frame and the second broadcast frame to the zero-power device.

In the foregoing scenarios, through such operations, sufficient broadcast frames can be quickly transmitted to the zero-power device at moments of initiating item search and warehouse stocktaking processes. In this way, the zero-power device quickly completes time-frequency synchronization and acquires system information, such that item search and warehouse stocktaking are accelerated.

In some embodiments, at least one first broadcast frame is transmitted within a first time window. The at least one first broadcast frame further carries indication information of the first time window. In a case where a plurality of first broadcast frames are present within the first time window, all or at least one of the plurality of first broadcast frames carry the indication information of the first time window.

In some embodiments, the first time window is represented as: a window start point + a window length.

In some embodiments, a first time-domain position occupied by the first broadcast frame and a remaining time represent a length of the first time window. That is, all or at least one of the first broadcast frames may carry the remaining time of the first time window. For example, each first broadcast frame except the last first broadcast frame carries the remaining time. A remaining time carried by a first broadcast frame is 1000 ms, indicating that the remaining time of the first time window is 1000 ms starting from a time-domain position of the first broadcast frame.

In some embodiments, a current first broadcast frame carries indication information of a time-domain position of a next first broadcast frame. In a case where the indication information is present, the first time window has not ended and the indication information indicates the time-domain position of the next first broadcast frame. In a case where the indication information is not present, the first time window ends subsequent to the time-domain position of the first broadcast frame.

In summary, in the method according to the embodiments of the present disclosure, the first broadcast frame is received, wherein the first broadcast frame is transmitted at a time-domain position different from that of the periodically transmitted second broadcast frame, and the first broadcast frame is used to help the zero-power device to complete time-frequency synchronization and acquire the system information, such that transmission opportunities of the broadcast frame are increased, a time for completing time-frequency synchronization is reduced, a communication process between the network device and the zero-power device is accelerated, and a waiting time for the zero-power device to receive the broadcast frame and power consumption of the zero-power device are reduced.

In the method according to the embodiments of the present disclosure, the periodically transmitted second broadcast frame is further received to periodically complete time-frequency synchronization and update the system information, thereby maintaining stability of the zero-power device.

In the method according to the embodiments of the present disclosure, the first broadcast frame and the second broadcast frame are designed to have different structures. For example, the preamble sequence of the first beacon frame is longer than that of the second beacon frame, thereby providing better synchronization performance. Alternatively, the code rate of the data portion of the first beacon frame is lower than the code rate of the data portion of the second beacon frame, thereby improving the probability that the zero-power device successfully receives the beacon frame.

In the method according to the embodiments of the present disclosure, transmission of the first broadcast frame is triggered based on an actual event, thereby meeting requirements for the zero-power device in different scenarios and improving versatility of the zero-power device.

In some embodiments, the first broadcast frame is a first beacon frame and the second broadcast frame is a second beacon frame for a Wi-Fi system; and the first broadcast frame is a first system information frame and the second broadcast frame is a second system information frame for a cellular communication system.

### Embodiments for a Wi-Fi system:

FIG. 13 is a flowchart of a method for communicating broadcast frames according to some embodiments of the present disclosure. The method is performed by a zero-power device. The method includes the following processes.

**In process 1310**, the zero-power device receices a first beacon frame.

In some embodiments, the first beacon frame is used by the zero-power device to quickly establish time-frequency synchronization with a network and acquire system information.

The first beacon frame is a supplementary or additional broadcast frame transmitted by a network device, and the first beacon frame is aperiodically transmitted or periodically transmitted by the network device.

In some embodiments, the first beacon frame is transmitted within a specified search space. The search space may be set dedicatedly for the zero-power device. The zero-power device listens for the first beacon frame within the specified search space. In some embodiments, the first beacon frame is transmitted within a specified resource pool, wherein the resource pool may be set dedicatedly for the zero-power device.

In some embodiments, the first beacon frame is transmitted in via a periodic transmission.

Alternatively, the first beacon frame is transmitted via an aperiodic transmission.

In some embodiments, the aperiodic transmission includes at least one of a continuous transmission, a discontinuous transmission, or a burst transmission.

In the continuous transmission, the first beacon frame is transmitted n times one after another without any interval, wherein n is an integer greater than 1. In the discontinuous transmission, an interval is present between transmissions of the first beacon frame. The interval may or may not be periodic. In the burst transmission, the first beacon frame is transmitted at any time, and an interval between two transmissions is usually longer and more random in comparison with the discontinuous transmission.

In some embodiments, a structure format of the first beacon frame is as illustrated in FIG. 14. The first beacon frame includes a preamble portion and a data portion, including at least one of the following fields: preamble, frame control, destination address (DA), source address (SA), basic SSID (BSSID), sequence number, frame body, and frame check sequence (FCS).

The frame body field includes at least one of the following subfields (system information): timestamp, beacon interval (BI), capability information, SSID, data rate, maximum transmit power, channel information, TIM, basic service set (BSS) load, quality of service (QoS) function, robust security network (RSN) function, and vendor-specific information.

Preamble is used to locate a start of the first beacon frame and perform channel estimation. Timestamp indicates a system time. BI is used to indicate a time interval for periodic transmission. Capability information is used to transmit capability-related information of the network device when the first beacon frame is transmitted, and includes capability information of whether radio measurement is supported, capability information of whether automatic power saving is supported, capability information of whether QoS guarantee is supported, capability information of whether spectrum management is supported, capability information of whether network access in backscatter mode is supported, or the like. SSID indicates a logical name of a WLAN. Data rate indicates a basic rate and a supported rate. Maximum transmit power indicates a maximum power supported in a transmission process. Channel information indicates a channel used by the network device. TIM is a field used in a paging process. BSS load is a field indicating a channel utilization rate. QoS function indicates QoS and enhanced distributed channel access (EDCA) information. RSN function indicates temporal key integrity protocol (TKIP) or counter mode with cipher-block chaining message authentication code protocol (CCMP) cryptographic information and authentication mechanisms. Vendor-specific information indicates vendor-unique or vendor-specific information. Specific types and orders of the fields and subfields in the first beacon frame are not limited in the embodiments of the present disclosure. The foregoing content is used as an example for description.

In some embodiments, the first beacon frame includes some system information. As illustrated in FIG. 15, fields in the first beacon frame are the same as those illustrated in FIG. 14. Details are not elaborated herein any further. The frame body field includes at least one of the following subfields (system information): timestamp, BI, capability information, data rate, maximum transmit power, and TIM. Specific types and an order of the subfields in the first beacon frame are not limited in the embodiments of the present disclosure. The foregoing content is used as an example for description.

**In process 1320**, the zero-power device receives a second beacon frame.

The second beacon frame is a broadcast frame periodically transmitted by the network device.

In some embodiments, the second beacon frame is used by the zero-power device to periodically establish time-frequency synchronization with a network and acquire system information. For example, a period is 100 ms. In some embodiments, the first beacon frame and the second beacon frame have an identical structure, as illustrated in FIG. 14. Details are not elaborated herein any further.

In some embodiments, the first beacon frame and the second beacon frame have different structures, including at least one of the following cases.
(1) The first beacon frame and the second beacon frame use different preambles.
(2) A preamble sequence of the first beacon frame and a preamble sequence of the second beacon frame differ in length.
(3) A quantity of information types in a data portion of the first beacon frame is less than or greater than a quantity of information types in a data portion of the second beacon frame.
(4) A code rate of a data portion of the first beacon frame is lower than a code rate of a data portion of the second beacon frame.

Through designs (1) and (2), different synchronization performance can be provided. For example, in a case where the preamble sequence of the first beacon frame is longer than that of the second beacon frame, more synchronization signals can be contained, such that a probability and accuracy of identifying the data portion by the zero-power device are improved, thereby providing better synchronization performance.

Through design (3), in a case where the quantity of information types in the data portion of the first beacon frame is less than the quantity of information types in the data portion of the second beacon frame, for example, only information such as a timestamp and a period of the second beacon frame is contained, key information can be quickly transmitted to the zero-power device. A small data portion can also improve a reception probability of the zero-power device. In a case where the quantity of information types in the data portion of the first beacon frame is greater than the quantity of information types in the data portion of the second beacon frame, system information can be directly transmitted to the zero-power device to help the zero-power device to establish time-frequency synchronization.

Through design (4), in a case where the code rate of the data portion of the first beacon frame is lower than the code rate of the data portion of the second beacon frame, a probability that the zero-power device successfully receives the beacon frame can be improved.

In some embodiments, the first beacon frame and the second beacon frame have different structures. The structure of the second beacon frame is as illustrated in FIG. 14. The structure of the first beacon frame is as illustrated in FIG. 15. The first beacon frame is a simplified version of the second beacon frame. For example, the first beacon frame does not include at least one of the following fields: SSID, channel information, BSS load, QoS function, RSN function, and vendor-specific information. Simplified content is not limited in the embodiments of the present disclosure. The foregoing content is used as an example for description.

In some embodiments, the zero-power device acquires some system information over the first beacon frame, and then acquires the other system information over the second beacon frame. For example, the first beacon frame includes the timestamp, BI, capability information of whether radio measurement is supported, capability information of whether automatic power saving is supported, capability information of whether network access in backscatter mode is supported, data rate, maximum transmit power, and TIM, and the second beacon frame includes all of the foregoing system information. The some system information contained is not limited in the embodiments of the present disclosure. The foregoing content is used as an example for description.

**In process 1330**, the zero-power device completes, based on at least one of the first beacon frame or the second beacon frame, at least one of: performing time-frequency synchronization with a wireless network, acquiring system information, acquiring energy for power supply, or acquiring scheduling information.

In some embodiments, based solely on the first beacon frame, time-frequency synchronization is performed based on the timestamp in the first beacon frame, the system information is acquired based on system information carried by the first beacon frame, the energy for power supply is acquired based on wireless energy carried by the first beacon frame, and the scheduling information is acquired based on scheduling information carried by the first beacon frame.

In some embodiments, based solely on the second beacon frame, time-frequency synchronization is performed based on the timestamp in the second beacon frame, the system information is acquired based on system information carried by the second beacon frame, the energy for power supply is acquired based on wireless energy carried by the second beacon frame, and the scheduling information is acquired based on scheduling information carried by the second beacon frame.

In some embodiments, in a case where the second beacon frame is received prior to the first beacon frame, at least one function is performed based on the second beacon frame and the other functions are performed based on the first beacon frame. For example, time-frequency synchronization is performed based on the timestamp in the second beacon frame, the system information is acquired based on system information carried by the second beacon frame, the energy for power supply is acquired based on wireless energy carried by the second beacon frame, and the scheduling information is acquired based on scheduling information carried by the first beacon frame.

In some embodiments, in a case where the first beacon frame is received prior to the second beacon frame, at least one function is performed based on the first beacon frame and the other functions are performed based on the second beacon frame. For example, time-frequency synchronization is performed based on the timestamp in the first beacon frame, the system information is acquired based on system information carried by the first beacon frame, the energy for power supply is acquired based on wireless energy carried by the first beacon frame, and the scheduling information is acquired based on scheduling information carried by the second beacon frame.

Alternatively, time-frequency synchronization is performed based on the timestamp in the first beacon frame. Some system information is acquired based on some system information carried by the first beacon frame, such as the BI, maximum transmit power, TIM, and time-domain position information of a next second beacon frame. The other system information is acquired from the next second beacon frame based on the time-domain position information of the next second beacon frame. The energy for power supply is acquired based on wireless energy carried by the first beacon frame. The scheduling information is acquired based on scheduling information carried by the second beacon frame.

Alternatively, time-frequency synchronization is performed based on the timestamp in the first beacon frame. Some system information is acquired based on some system information carried by the first beacon frame, such as the BI, maximum transmit power, TIM, and time-domain position information of a next first beacon frame. The other system information is acquired from the next first beacon frame based on the time-domain position information of the next first beacon frame. The energy for power supply is acquired based on wireless energy carried by the first beacon frame. The scheduling information is acquired based on scheduling information carried by the second beacon frame.

The at least one function is at least one of the following functions mentioned above: performing time-frequency synchronization, acquiring the system information, acquiring the energy for power supply, and acquiring the scheduling information. The other functions are all or at least one of the functions except the at least one function.

In some embodiments, the zero-power device may alternatively complete the foregoing functions based on at least three beacon frames, which is not limited in the present disclosure. A quantity of first beacon frames and/or a quantity of second beacon frames contained in the at least three beacon frames are/is not limited.

In the embodiments of the present disclosure, processes 1310 and 1320 are optional. In different embodiments, one or more of these processes may be omitted or replaced. For example, process 1320 is omitted and only the first beacon frame is received.

Processes 1310 and 1330 may be implemented as independent embodiments, and processes 1320 and 1330 may be implemented as independent embodiments, but are not limited thereto.

Process 1310 may be implemented as independent embodiments, such as being implemented independently as a method for receiving a beacon frame.

Process 1320 may be implemented as independent embodiments, such as being implemented independently as a method for receiving a beacon frame.

Process 1330 may be implemented as independent embodiments, such as being implemented independently as a method for communicating beacon frames.

### Embodiments for a cellular communication system:

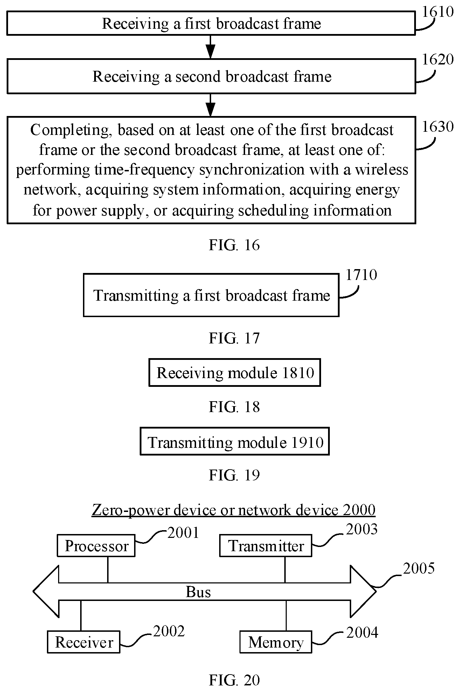

FIG. 16 is a flowchart of a method for communicating broadcast frames according to some embodiments of the present disclosure. The method is performed by a zero-power device. The method includes the following processes:

**In process 1610**, the zero-power device receives a first broadcast frame.

In some embodiments, the first broadcast frame is a broadcast frame configured to carry at least one of a synchronization signal or system information.

The first broadcast frame is a supplementary or additional broadcast frame transmitted by a network device, and the first broadcast frame is aperiodically transmitted or periodically transmitted by the network device.

In some embodiments, the broadcast frame configured to carry at least one of the synchronization signal or the system information may have different names in different cellular communication networks, for example, an SSB in a 5G system and a PBCH in a 4G system. The name is not limited in the embodiments of the present disclosure. The first broadcast frame is used as an example for description.

In some embodiments, the first broadcast frame is transmitted within a specified search space. The search space may be set dedicatedly for the zero-power device. The zero-power device listens for the first broadcast frame within the specified search space. In some embodiments, the first broadcast frame is transmitted within a specified resource pool, wherein the resource pool may be set dedicatedly for the zero-power device.

In some embodiments, the first broadcast frame is transmitted via a periodic transmission.

Alternatively, the first broadcast frame is transmitted via an aperiodic transmission.

In some embodiments, the aperiodic transmission includes at least one of a continuous transmission, a discontinuous transmission, or a burst transmission.

In the continuous transmission, the first broadcast frame is transmitted n times one after another without any interval, wherein n is an integer greater than 1. In the discontinuous transmission, an interval is present between transmissions of the first broadcast frame. The interval may or may not be periodic. In the burst transmission, the first broadcast frame is transmitted at any time, and an interval between two transmissions is usually longer and more random in comparison with the discontinuous transmission.

In some embodiments, system information carried by the first broadcast frame includes at least one of a channel number, channel bandwidth, a timestamp, subcarrier spacing information, a system frame number (SFN), or paging information.

The channel number indicates a channel on which the network device chooses to transmit data. The channel bandwidth indicates a frequency range of the channel on which the data is transmitted. The timestamp indicates a system time. The subcarrier spacing information indicates a spacing between subcarriers. The SFN identifies an order of system frames and the SFN is used to synchronize information. The paging information is used to transmit resource allocation configuration or specified operation indication to the zero-power device. Specific types of the system information carried by the first broadcast frame are not limited in the embodiments of the present disclosure. The foregoing content is used as an example for description.

**In process 1620**, the zero-power device receives a second broadcast frame.

The second broadcast frame is a broadcast frame periodically transmitted by the network device.

In some embodiments, the second broadcast frame is used by the zero-power device to periodically establish time-frequency synchronization with a network and acquire system information. For example, a period is 100 ms. In some embodiments, the first broadcast frame and the second broadcast frame have an identical structure.

In some embodiments, the first broadcast frame and the second broadcast frame have different structures. The first broadcast frame is a simplified version of the second broadcast frame. For example, the first broadcast frame does not include the subcarrier spacing information. Simplified content is not limited in the embodiments of the present disclosure. The foregoing content is used as an example for description.

In some embodiments, the zero-power device acquires some system information over the first broadcast frame, and then acquires the other system information over the second broadcast frame. For example, the first broadcast frame includes the channel number, channel bandwidth, timestamp, SFN, and paging information, and the second broadcast frame includes all of the foregoing system information. The some system information contained is not limited in the embodiments of the present disclosure. The foregoing content is used as an example for description.

**In process 1630**, the zero-power device completes, based on at least one of the first broadcast frame or the second broadcast frame, at least one of: performing time-frequency synchronization with a wireless network, acquiring system information, acquiring energy for power supply, or acquiring scheduling information.

In some embodiments, based solely on the first broadcast frame, time-frequency synchronization is performed based on the timestamp in the first broadcast frame, the system information is acquired based on system information carried by the first broadcast frame, the energy for power supply is acquired based on wireless energy carried by the first broadcast frame, and the scheduling information is acquired based on scheduling information carried by the first broadcast frame.

In some embodiments, based solely on the second broadcast frame, time-frequency synchronization is performed based on the timestamp in the second broadcast frame, the system information is acquired based on system information carried by the second broadcast frame, the energy for power supply is acquired based on wireless energy carried by the second broadcast frame, and the scheduling information is acquired based on scheduling information carried by the second broadcast frame.

In some embodiments, in a case where the second broadcast frame is received prior to the first broadcast frame, at least one function is performed based on the second broadcast frame and the other functions are performed based on the first broadcast frame. For example, time-frequency synchronization is performed based on the timestamp in the second broadcast frame, the system information is acquired based on system information carried by the second broadcast frame, the energy for power supply is acquired based on wireless energy carried by the second broadcast frame, and the scheduling information is acquired based on scheduling information carried by the first broadcast frame.

In some embodiments, in a case where the first broadcast frame is received prior to the second broadcast frame, at least one function is performed based on the first broadcast frame and the other functions are performed based on the second broadcast frame. For example, time-frequency synchronization is performed based on the timestamp in the first broadcast frame, the system information is acquired based on system information carried by the first broadcast frame, the energy for power supply is acquired based on wireless energy carried by the first broadcast frame, and the scheduling information is acquired based on scheduling information carried by the second broadcast frame.

Alternatively, time-frequency synchronization is performed based on the timestamp in the first broadcast frame. Some system information is acquired based on some system information carried by the first broadcast frame, such as the channel number, SFN, paging information, and time-domain position information of a next second broadcast frame. The other system information is acquired from the next second broadcast frame based on the time-domain position information of the next second broadcast frame. The energy for power supply is acquired based on wireless energy carried by the first broadcast frame. The scheduling information is acquired based on scheduling information carried by the second broadcast frame.

The at least one function is at least one of the following functions mentioned above: performing time-frequency synchronization, acquiring the system information, acquiring the energy for power supply, and acquiring the scheduling information. The other functions are all or at least one of the functions except the at least one function.

In some embodiments, the zero-power device may alternatively complete the foregoing functions based on at least three broadcast frames, which is not limited in the present disclosure. A quantity of first broadcast frames and/or a quantity of second broadcast frames contained in the at least three broadcast frames are/is not limited.

In the embodiments of the present disclosure, processes 1610 and 1620 are optional. In different embodiments, one or more of these processes may be omitted or replaced. For example, process 1620 is omitted and only the first broadcast frame is received.

Processes 1610 and 1630 may be implemented as independent embodiments, and processes 1620 and 1630 may be implemented as independent embodiments, but are not limited thereto.

Process 1610 may be implemented as independent embodiments, such as being implemented independently as a method for receiving a broadcast frame.

Process 1620 may be implemented as independent embodiments, such as being implemented independently as a method for receiving a broadcast frame.

Process 1630 may be implemented as independent embodiments, such as being implemented independently as a method for communicating broadcast frames.

In summary, in the method according to the embodiments of the present disclosure, the first beacon frame is received, wherein the first beacon frame is transmitted at a time-domain position different from that of the periodically transmitted second beacon frame, and the first beacon frame is used to help the zero-power device to complete time-frequency synchronization and acquire the system information, such that transmission opportunities of the beacon frame are increased, a time for completing time-frequency synchronization is reduced, a communication process between the network device and the zero-power device is accelerated, and a waiting time for the zero-power device to receive the beacon frame and power consumption of the zero-power device are reduced.

In the method according to the embodiments of the present disclosure, the first broadcast frame is received. The first broadcast frame is a broadcast frame transmitted at a time-domain position different from that of the periodically transmitted second broadcast frame, and the first broadcast frame is used to help the zero-power device to complete time-frequency synchronization and acquire the system information, such that transmission opportunities of the broadcast frame are increased, a time for completing time-frequency synchronization is reduced, a communication process between the network device and the zero-power device is accelerated, and a waiting time for the zero-power device to receive the beacon frame and power consumption of the zero-power device are reduced.

In the method according to the embodiments of the present disclosure, the second beacon frame or the second broadcast frame is received to periodically complete time-frequency synchronization and update the system information, thereby maintaining stability of the zero-power device.

In the method according to the embodiments of the present disclosure, the first beacon frame and the second beacon frame are designed to have different structures, such that the zero-power device can first acquire some system information over the first beacon frame, and then acquire the other system information over the second beacon frame. In this way, the zero-power device quickly completes time-frequency synchronization and acquires the system information.

In the method according to the embodiments of the present disclosure, the first broadcast frame and the second broadcast frame are designed to have different structures, such that the zero-power device can first acquire some system information over the first broadcast frame, and then acquire the other system information over the second broadcast frame. In this way, the zero-power device quickly completes time-frequency synchronization and acquires the system information.

FIG. 17 is a flowchart of a method for communicating broadcast frames according to some embodiments of the present disclosure. The method is performed by a network device. The method includes the following process.

**In process 1710**, the network device transmits a first broadcast frame.

The first broadcast frame is transmitted between periodically transmitted second broadcast frames, and/or prior to a 1^{st} second broadcast frame, and/or subsequent to a last second broadcast frame.

In some embodiments, the first broadcast frame is transmitted at a time-domain position different from that of the periodically transmitted second broadcast frame, which may further be understood as that the first broadcast frame is a supplementary or additional broadcast frame transmitted at a time-domain position different from that of the periodically transmitted second broadcast frame.

In some embodiments, the first broadcast frame is transmitted within a specified search space. The search space may be set dedicatedly for a zero-power device. The zero-power device listens for the first broadcast frame within the specified search space. In some embodiments, the first broadcast frame is transmitted within a specified resource pool, wherein the resource pool may be set dedicatedly for the zero-power device.

In some embodiments, the first broadcast frame is transmitted via a periodic transmission.

Alternatively, the first broadcast frame is transmitted via an aperiodic transmission.

In some embodiments, the aperiodic transmission includes at least one of a continuous transmission, a discontinuous transmission, or a burst transmission.

In some embodiments, the first broadcast frame and the second broadcast frame have an identical structure.

In some embodiments, the first broadcast frame and the second broadcast frame have different structures.

In some embodiments, that the first broadcast frame and the second broadcast frame have different structures includes at least one of the following cases:
the first broadcast frame and the second broadcast frame use different preambles;
a preamble sequence of the first broadcast frame and a preamble sequence of the second broadcast frame differ in length;
a quantity of information types in a data portion of the first broadcast frame is less than or greater than a quantity of information types in a data portion of the second broadcast frame; or
a code rate of a data portion of the first broadcast frame is lower than a code rate of a data portion of the second broadcast frame.

In some embodiments, the first broadcast frame and the second broadcast frame are distinguished by at least one of a type indicator in an information field, a preamble, or a SIG field.

In some embodiments, the first broadcast frame carries time-domain position information of a next second broadcast frame.

In some embodiments, the first broadcast frame is transmitted by the network device in response to a trigger event.

In some embodiments, the trigger event includes at least one of an item search event, a logistics vehicle arrival event, or a warehouse stocktaking event.

In some embodiments, the first broadcast frame is transmitted by the network device. The network device is at least one of a device in a Wi-Fi system or a device in a cellular communication system.

For specific implementation details of the foregoing method for communicating broadcast frames, reference is made to a zero-power device. Details are not elaborated herein any further.

In summary, in the method according to the embodiments of the present disclosure, the first broadcast frame is transmitted. The first broadcast frame has a time position close to a wake-up time of the zero-power device, such that the first broadcast frame helps the zero-power device to complete time-frequency synchronization and acquire system information. In this way, a communication process between the network device and the zero-power device is accelerated, and a waiting time for the zero-power device to receive the broadcast frame and power consumption of the zero-power device are reduced.

In the method according to the embodiments of the present disclosure, the second broadcast frame is transmitted to periodically complete time-frequency synchronization and update the system information, thereby maintaining stability of the zero-power device.

In the foregoing embodiments, processes with a same serial number may be regarded as a same process. The embodiments corresponding to FIG. 7, the embodiments corresponding to FIG. 8, the embodiments corresponding to FIG. 9, the embodiments corresponding to FIG. 13, the embodiments corresponding to FIG. 16, and the embodiments corresponding to FIG. 17 may be implemented independently or in combination, which is not limited in the present disclosure.

FIG. 18 is a block diagram of an apparatus for communicating broadcast frames according to some embodiments of the present disclosure. The apparatus may be implemented as a zero-power device or a part of a zero-power device through software, hardware, or a combination of both. The apparatus includes a receiving module 1810. A function of the receiving module 1810 is implemented through a receiver in a zero-power device.

The receiving module 1810 is configured to receive a first broadcast frame.

The first broadcast frame is transmitted between periodically transmitted second broadcast frames, and/or prior to a 1^{st} second broadcast frame, and/or subsequent to a last second broadcast frame.

In some embodiments, the first broadcast frame is transmitted at a time-domain position different from that of the periodically transmitted second broadcast frame, which may further be understood as that the first broadcast frame is a supplementary or additional broadcast frame transmitted at a time-domain position different from that of the periodically transmitted second broadcast frame.

In some embodiments, in a case where a network device is a device in a Wi-Fi system, the first broadcast frame is a first beacon frame. The first beacon frame is used by the apparatus to quickly establish time-frequency synchronization with a network and acquire system information.

In some embodiments, in a case where a network device is a device in a cellular communication system, the first broadcast frame is system broadcast information. The system broadcast information is used to broadcast a synchronization signal and system information, such as an SSB in a 5G system.

In some embodiments, the first broadcast frame is transmitted by a network device. The network device is at least one of a device in a Wi-Fi system or a device in a cellular communication system (or referred to as a mobile communication system).

In some embodiments, the receiving module 1810 is used to receive the first broadcast frame and the second broadcast frame.

The first broadcast frame is a supplementary or additional broadcast frame transmitted by the network device, and the first broadcast frame is aperiodically transmitted or periodically transmitted by the network device. The second broadcast frame is a broadcast frame periodically transmitted by the network device.

In some embodiments, the first broadcast frame is transmitted within a specified search space. The search space may be set dedicatedly for the apparatus. The apparatus listens for the first broadcast frame within the specified search space.

In some embodiments, the first broadcast frame is transmitted within a specified resource pool, wherein the resource pool may be set dedicatedly for the apparatus.

The second broadcast frame is a second beacon frame or system broadcast information. The second beacon frame is used by the apparatus to periodically establish time-frequency synchronization with a network and acquire system information. For example, a period is 100 ms.

The second beacon frame is a periodically transmitted beacon frame, and may carry information such as capability information and an SSID.

In some embodiments, the second beacon frame includes a preamble portion and a data portion. The preamble portion is used to indicate a start of data transmission and help the apparatus determine a valid data portion. The preamble portion includes a set of specific signals used for clock synchronization between the apparatus and a transmitting device (the network device).

In some embodiments, the network device configures at least one of a position for transmitting the first broadcast frame, a quantity of times for transmitting the first broadcast frame, a length of a time window for transmitting the first broadcast frame, or a position for transmitting a next second broadcast frame. The apparatus receives at least one of the position for transmitting the first broadcast frame, the quantity of times for transmitting the first broadcast frame, the length of the time window for transmitting the first broadcast frame, or the position for transmitting the next second broadcast frame. The position for transmitting the next second broadcast frame may be an absolute time position or an offset position relative to a current first broadcast frame.

In some embodiments, the network device transmits at least one first broadcast frame.

In a case where a signal strength is greater than a first threshold, the network device transmits one first broadcast frame. For example, in a case where a router is nearby, one first broadcast frame can help the apparatus to complete time-frequency synchronization and acquire all system information. The first threshold is predetermined by a person skilled in the art.

In a case where a signal strength is less than a second threshold, the network device transmits a plurality of first broadcast frames. For example, in a case where a router is far away, a plurality of first broadcast frames are needed to help the apparatus to complete time-frequency synchronization and acquire all system information. The second threshold is predetermined by a person skilled in the art.

The signal strength may be a signal strength when the apparatus transmits a signal and/or data to the network device. For example, the first threshold is greater than or equal to the second threshold.

In some embodiments, the first broadcast frame is transmitted via: a periodic transmission or an aperiodic transmission.

In some embodiments, the aperiodic transmission includes at least one of a continuous transmission, a discontinuous transmission, or a burst transmission.

In the continuous transmission, the first broadcast frame is transmitted n times one after another without any interval, wherein n is an integer greater than 1. In the discontinuous transmission, an interval is present between transmissions of the first broadcast frame. The interval may or may not be periodic. In the burst transmission, the first broadcast frame is transmitted at any time, and an interval between two transmissions is usually longer and more random in comparison with the discontinuous transmission.

In some embodiments, the first broadcast frame and the second broadcast frame have an identical structure.

For example, the first broadcast frame is a first beacon frame, and the second broadcast frame is a second beacon frame. The first beacon frame and the second beacon frame have an identical structure: a preamble portion precedes a data portion. The first beacon frame and the second beacon frame have a same preamble portion, and data portions first beacon frame and the second beacon frame have same key parameters including a length and a code rate. The first beacon frame and the second beacon frame carry a same type of configuration information, wherein most parameters have same values, and a few parameters have different values. For example, timestamp information varies with time positions at which the two beacon frames are transmitted.

The preamble portion includes an L-STF, an L-LTF, and an L-SIG field. The L-STF contains one specified and unique waveform that is easily detected by the apparatus. Functions of the L-STF include at least one of packet detection, AGC, initial frequency offset estimation, or initial time synchronization. The L-LTF also contains one specified and unique waveform, though not identical to that of the L-STF. Functions of the L-LTF include at least one of channel estimation, more accurate frequency offset estimation, or more accurate time synchronization. The L-SIG field contains information such as a transmit rate, a coding scheme, a guard interval, and a length, and the L-SIG field is used to calculate duration of a data packet.

In some embodiments, the first broadcast frame and the second broadcast frame have different structures.

In some embodiments, that the first broadcast frame and the second broadcast frame have different structures includes at least one of the following cases.
(1) The first broadcast frame and the second broadcast frame use different preambles.
(2) A preamble sequence of the first broadcast frame and a preamble sequence of the second broadcast frame differ in length.
(3) A quantity of information types in a data portion of the first broadcast frame is less than or greater than a quantity of information types in a data portion of the second broadcast frame.
(4) A code rate of a data portion of the first broadcast frame is lower than a code rate of a data portion of the second broadcast frame.

An example in which the first broadcast frame is a first beacon frame and the second broadcast frame is a second beacon frame is used for description.

Through designs (1) and (2), different synchronization performance can be provided. For example, in a case where the preamble sequence of the first beacon frame is longer than that of the second beacon frame, more synchronization signals can be contained, such that a probability and accuracy of identifying the data portion by the apparatus are improved, thereby providing better synchronization performance.

Through design (3), in a case where the quantity of information types in the data portion of the first beacon frame is less than the quantity of information types in the data portion of the second beacon frame, for example, only information such as a timestamp and a period of the second beacon frame is contained, key information can be quickly transmitted to the apparatus. A small data portion can also improve a reception probability of the apparatus. In a case where the quantity of information types in the data portion of the first beacon frame is greater than the quantity of information types in the data portion of the second beacon frame, system information can be directly transmitted to the apparatus to help the apparatus to establish time-frequency synchronization.

Through design (4), in a case where the code rate of the data portion of the first beacon frame is lower than the code rate of the data portion of the second beacon frame, a probability that the apparatus successfully receives the beacon frame can be improved.

In some embodiments, in a Wi-Fi/WLAN system, a period of the second broadcast frame is associated with partial configuration. For example, the second beacon frame may carry a TIM, wherein the TIM is used to inform the apparatus whether downlink data needs to be transmitted. A period of the TIM is an integer multiple of the period of the second beacon frame. Each beacon frame has a TIM. The TIM contains a bitmap control field, wherein each bit is mapped to one apparatus for communicating broadcast frames. A value of 1 indicates that the apparatus for communicating broadcast frames corresponding to the bit has downlink data buffered in the network device.

For another example, configuration of a RAW may be indicated in the second beacon frame. Within the RAW, the apparatus transmits data with the network device, and the configuration of the RAW is subsequent to the second beacon frame. A key idea of the RAW is to restrict a set of stations that can access a channel and spread their access attempts over a long period of time, thus reducing interference and improving communication reliability and efficiency.

In some embodiments, in a case where the network device transmits both the first broadcast frame and the second broadcast frame, the apparatus needs to distinguish between the first broadcast frame and the second broadcast frame because the following reasons.

First, upon completing time-frequency synchronization and acquiring system information based on either the first broadcast frame or the second broadcast frame, the apparatus needs to periodically maintain time-frequency synchronization based on the second broadcast frame. Therefore, a position of the second broadcast frame needs to be determined.

Second, new system information, such as the configuration of the RAW, may be transmitted over the second broadcast frame at any time. The apparatus also needs to acquire the new system information based on the second broadcast frame.

In some embodiments, the first broadcast frame and the second broadcast frame are distinguished by at least one of a type indicator in an information field, a preamble, or a SIG field.

For example, an FC field in a beacon MAC header is used for type indication. The FC field includes a frame type field, a subtype field, or another field. The frame type field specifies a type of a data frame. The subtype field specifies a more specific subtype of a data frame.

Alternatively, the preamble is used for indication. The first broadcast frame and the second broadcast frame use different preamble sequence designs, such that the first broadcast frame and the second broadcast frame are distinguished.

Alternatively, the SIG field (i.e., the L-SIG field) in the preamble is used for indication. The SIG field contains channel state information, such as a signal-to-noise ratio, rate, and frequency. The apparatus may identify a channel state by decoding and analyzing a signal parameter in the SIG field and adjust a transmit rate. The first broadcast frame and the second broadcast frame use different bit values in the SIG field, such that the first broadcast frame and the second broadcast frame can be distinguished.

In some embodiments, upon being woken up, the apparatus may first search for the first broadcast frame or the second broadcast frame. The apparatus completes time-frequency synchronization and acquires system information based on either of the first broadcast frame or the second broadcast frame.

In some embodiments, the first broadcast frame carries time-domain position information of the next second broadcast frame. The time-domain position information may be an absolute time position or an offset position relative to the current first broadcast frame.

In some embodiments, the first broadcast frame is transmitted by the network device in response to a trigger event.

In some embodiments, the network device triggers transmission of the first broadcast frame based on the trigger event. That is, in a case where the apparatus needs to complete time-frequency synchronization and acquire system information, for example, in an item search event, the network device may transmit a radio wave to power the apparatus, and transmit the first broadcast frame and the second broadcast frame to the apparatus in response to the item search event being triggered. For example, the first broadcast frame is transmitted prior to the second broadcast frame; or the first broadcast frame is transmitted between periodically transmitted second broadcast frames.

In some embodiments, the trigger event includes at least one of:
·an item search event;
·a logistics vehicle arrival event; or
·a warehouse stocktaking event.

For example, in a logistics scenario, the network device perceives arrival of a logistics vehicle (for example, through acoustic sensing or motion sensing). When the logistics vehicle arrives, the network device initiates a stocktaking process for items on the logistics vehicle. In this case, the network device may transmit a radio wave to power the apparatus, and transmit the first broadcast frame and the second broadcast frame to the apparatus.

Similarly, in a warehousing scenario, when stocktaking is needed for items in a warehouse, the network device may transmit a radio wave to power the apparatus, and transmit the first broadcast frame and the second broadcast frame to the apparatus.

In the foregoing scenarios, through such operations, sufficient broadcast frames can be quickly transmitted to the apparatus at moments of initiating item search and warehouse stocktaking processes. In this way, the apparatus quickly completes time-frequency synchronization and acquires system information, thereby accelerating item search and warehouse stocktaking.

In some embodiments, the first broadcast frame is transmitted by the network device. The network device is at least one of a device in a Wi-Fi system or a device in a cellular communication system.

In some embodiments, at least one first broadcast frame is transmitted within a first time window. The at least one first broadcast frame further carries indication information of the first time window. In a case where a plurality of first broadcast frames are present within the first time window, all or at least one of the plurality of first broadcast frames carry the indication information of the first time window.

In some embodiments, the first time window is represented as: a window start point + a window length.

In some embodiments, a first time-domain position occupied by the first broadcast frame and a remaining time represent a length of the first time window. That is, all or at least one of the first broadcast frames may carry the remaining time of the first time window. For example, each first broadcast frame except the last first broadcast frame carries the remaining time. A remaining time carried by a first broadcast frame is 1000 ms, indicating that the remaining time of the first time window is 1000 ms starting from a time-domain position of the first broadcast frame.

In some embodiments, a current first broadcast frame carries indication information of a time-domain position of a next first broadcast frame. In a case where the indication information is present, the first time window has not ended and the indication information indicates the time-domain position of the next first broadcast frame. In a case where the indication information is not present, the first time window ends subsequent to the time-domain position of the first broadcast frame.

In the embodiments of the present disclosure, the receiving module 1810 may be split into a plurality of receiving modules, for example, a first receiving module and a second receiving module. The first receiving module is configured to receive the first broadcast frame, and the second receiving module is configured to receive the second broadcast frame. Alternatively, the first receiving module is configured to receive the second broadcast frame, and the second receiving module is configured to receive the first broadcast frame. Functions of different receiving modules are not limited in the embodiments of the present disclosure.

In the embodiments of the present disclosure, one receiving module 1810 is used as an example for description. A quantity of receiving modules 1810 is not limited in the present disclosure.

For function descriptions of the receiving module 1810, reference is made to content of process 910 in the embodiments in FIG. 9.

FIG. 19 is a block diagram of an apparatus for communicating broadcast frames according to some embodiments of the present disclosure. The apparatus may be implemented as a network device or a part of a network device through software, hardware, or a combination of both. The apparatus includes a transmitting module 1910. A function of the transmitting module 1910 is implemented through a transmitter in a network device.

The transmitting module 1910 is configured to transmit a first broadcast frame.

The first broadcast frame is transmitted between periodically transmitted second broadcast frames, and/or prior to a 1^{st} second broadcast frame, and/or subsequent to a last second broadcast frame.

In some embodiments, the first broadcast frame is transmitted at a time-domain position different from that of the periodically transmitted second broadcast frame, which may further be understood as that the first broadcast frame is a supplementary or additional broadcast frame transmitted at a time-domain position different from that of the periodically transmitted second broadcast frame.

In some embodiments, in a case where the apparatus is a device in a Wi-Fi system, the first broadcast frame is a first beacon frame. The first beacon frame is used by a zero-power device to quickly establish time-frequency synchronization with a network and acquire system information.

In some embodiments, in a case where the apparatus is a device in a cellular communication system, the first broadcast frame is system broadcast information. The system broadcast information is configured to broadcast a synchronization signal and system information, such as an SSB in a 5G system.

In some embodiments, the first broadcast frame is transmitted by the apparatus. The apparatus is at least one of a device in a Wi-Fi system or a device in a cellular communication system (or referred to as a mobile communication system).

In some embodiments, the transmitting module 1910 is configured to transmit the first broadcast frame and the second broadcast frame.

The first broadcast frame is a supplementary or additional broadcast frame transmitted by the apparatus, and the first broadcast frame is aperiodically transmitted or periodically transmitted by the apparatus. The second broadcast frame is a broadcast frame periodically transmitted by the apparatus.

In some embodiments, the first broadcast frame is transmitted within a specified search space. The search space may be set dedicatedly for the zero-power device. The zero-power device listens for the first broadcast frame within the specified search space.

In some embodiments, the first broadcast frame is transmitted within a specified resource pool, wherein the resource pool may be set dedicatedly for the zero-power device.

The second broadcast frame is a second beacon frame or system broadcast information. The second beacon frame is used by the zero-power device to periodically establish time-frequency synchronization with a network and acquire system information. For example, a period is 100 ms.

The second beacon frame is a periodically transmitted beacon frame, and may carry information such as capability information and an SSID.

In some embodiments, the second beacon frame includes a preamble portion and a data portion. The preamble portion is used to indicate a start of data transmission and help a receiving device (the zero-power device) to determine a valid data portion. The preamble portion includes a set of specific signals used for clock synchronization between the receiving device (the zero-power device) and the apparatus.

In some embodiments, the apparatus configures at least one of a position for transmitting the first broadcast frame, a quantity of times for transmitting the first broadcast frame, a length of a time window for transmitting the first broadcast frame, or a position for transmitting a next second broadcast frame. The zero-power device receives at least one of the position for transmitting the first broadcast frame, the quantity of times for transmitting the first broadcast frame, the length of the time window for transmitting the first broadcast frame, or the position for transmitting the next second broadcast frame. The position for transmitting the next second broadcast frame may be an absolute time position or an offset position relative to a current first broadcast frame.

In some embodiments, the transmitting module 1910 is configured to transmit at least one first broadcast frame.

In a case where a signal strength is greater than a first threshold, the apparatus transmits one first broadcast frame. For example, in a case where a router is nearby, one first broadcast frame can help the zero-power device to complete time-frequency synchronization and acquire all system information. The first threshold is predetermined by a person skilled in the art.

In a case where a signal strength is less than a second threshold, the apparatus transmits a plurality of first broadcast frames. For example, in a case where a router is far away, a plurality of first broadcast frames are needed to help the zero-power device to complete time-frequency synchronization and acquire all system information. The second threshold is predetermined by a person skilled in the art.

The signal strength may be a signal strength when the zero-power device transmits a signal and/or data to the apparatus. For example, the first threshold is greater than or equal to the second threshold.

In some embodiments, the first broadcast frame is transmitted via: a periodic transmission or an aperiodic transmission.

In some embodiments, the aperiodic transmission includes at least one of a continuous transmission, a discontinuous transmission, or a burst transmission.

In the continuous transmission, the first broadcast frame is transmitted n times one after another without any interval, wherein n is an integer greater than 1. In the discontinuous transmission, an interval is present between transmissions of the first broadcast frame. The interval may or may not be periodic. In the burst transmission, the first broadcast frame is transmitted at any time, and an interval between two transmissions is usually longer and more random in comparison with the discontinuous transmission.

In some embodiments, the first broadcast frame and the second broadcast frame have an identical structure.

For example, the first broadcast frame is a first beacon frame, and the second broadcast frame is a second beacon frame. The first beacon frame and the second beacon frame have an identical structure: a preamble portion precedes a data portion. The first beacon frame and the second beacon frame have a same preamble portion, and data portions of the first beacon frame and the second beacon frame have same key parameters including a length and a code rate. The first beacon frame and the second beacon frame carry a same type of configuration information, wherein most parameters have same values, and a few parameters have different values. For example, timestamp information varies with time positions at which the two beacon frames are transmitted.

The preamble portion includes an L-STF, an L-LTF, and an L-SIG field. The L-STF contains one specified and unique waveform that is easily detected by the receiving device (the zero-power device). Functions of the L-STF include at least one of packet detection, AGC, initial frequency offset estimation, or initial time synchronization. The L-LTF also contains one specified and unique waveform, though not identical to that of the L-STF. Functions of the L-LTF include at least one of channel estimation, more accurate frequency offset estimation, or more accurate time synchronization. The L-SIG field contains information such as a transmit rate, a coding scheme, a guard interval, and a length, and the L-SIG field is used to calculate duration of a data packet.

In some embodiments, the first broadcast frame and the second broadcast frame have different structures.

In some embodiments, that the first broadcast frame and the second broadcast frame have different structures includes at least one of the following cases.
(1) The first broadcast frame and the second broadcast frame use different preambles.
(2) A preamble sequence of the first broadcast frame and a preamble sequence of the second broadcast frame differ in length.
(3) A quantity of information types in a data portion of the first broadcast frame is less than or greater than a quantity of information types in a data portion of the second broadcast frame.
(4) A code rate of a data portion of the first broadcast frame is lower than a code rate of a data portion of the second broadcast frame.

An example in which the first broadcast frame is a first beacon frame and the second broadcast frame is a second beacon frame is used for description.

Through designs (1) and (2), different synchronization performance can be provided. For example, in a case where the preamble sequence of the first beacon frame is longer than that of the second beacon frame, more synchronization signals can be included, such that a probability and accuracy of identifying the data portion by the zero-power device are improved, thereby providing better synchronization performance.

Through design (3), in a case where the quantity of information types in the data portion of the first beacon frame is less than the quantity of information types in the data portion of the second beacon frame, for example, only information such as a timestamp and a period of the second beacon frame is included, key information can be quickly transmitted to the zero-power device. A small data portion can also improve a reception probability of the zero-power device. In a case where the quantity of information types in the data portion of the first beacon frame is greater than the quantity of information types in the data portion of the second beacon frame, system information can be directly transmitted to the zero-power device to help the zero-power device to establish time-frequency synchronization.

Through design (4), in a case where the code rate of the data portion of the first beacon frame is lower than the code rate of the data portion of the second beacon frame, a probability that the zero-power device successfully receives the beacon frame can be improved.

In some embodiments, in a Wi-Fi/WLAN system, a period of the second broadcast frame is associated with partial configuration. For example, the second beacon frame may carry a TIM, wherein the TIM is used to inform the zero-power device whether downlink data needs to be transmitted. A period of the TIM is an integer multiple of the period of the second beacon frame. Each beacon frame has a TIM. The TIM contains a bitmap control field, wherein each bit is mapped to one zero-power device. A value of 1 indicates that the zero-power device corresponding to the bit has downlink data buffered in the apparatus.

For another example, configuration of a RAW may be indicated in the second beacon frame. Within the RAW, the zero-power device transmits data with the apparatus, and the configuration of the RAW is subsequent to the second beacon frame. A key idea of the RAW is to restrict a set of stations that can access a channel and spread their access attempts over a long period of time, thus reducing interference and improving communication reliability and efficiency.

In some embodiments, in a case where the apparatus transmits both the first broadcast frame and the second broadcast frame, the zero-power device needs to distinguish between the first broadcast frame and the second broadcast frame because the following reasons.

First, upon completing time-frequency synchronization and acquiring system information based on either the first broadcast frame or the second broadcast frame, the zero-power device needs to periodically maintain time-frequency synchronization based on the second broadcast frame. Therefore, a position of the second broadcast frame needs to be determined.

Second, new system information, such as the configuration of the RAW, may be transmitted over the second broadcast frame at any time. The zero-power device also needs to acquire the new system information based on the second broadcast frame.

In some embodiments, the first broadcast frame and the second broadcast frame are distinguished by at least one of a type indicator in an information field, a preamble, or a SIG field.

For example, an FC field of a beacon MAC header is used for type indication. The FC field includes a frame type field, a subtype field, or another field. The frame type field specifies a type of a data frame. The subtype field specifies a more specific subtype of a data frame.

Alternatively, the preamble is used for indication. The first broadcast frame and the second broadcast frame use different preamble sequence designs, such that the first broadcast frame and the second broadcast frame are distinguished.

Alternatively, the SIG field (i.e., the L-SIG field) in the preamble is used for indication. The SIG field contains channel state information, such as a signal-to-noise ratio, rate, and frequency. The zero-power device may identify a channel state by decoding and analyzing a signal parameter in the SIG field and adjust a transmit rate. The first broadcast frame and the second broadcast frame use different bit values in the SIG field, such that the first broadcast frame and the second broadcast frame can be distinguished.

In some embodiments, upon being woken up, the zero-power device may first search for the first broadcast frame or the second broadcast frame. The zero-power device completes time-frequency synchronization and acquires system information based on either of the first broadcast frame and the second broadcast frame.

In some embodiments, the first broadcast frame carries time-domain position information of the next second broadcast frame. The time-domain position information may be an absolute time position or an offset position relative to the current first broadcast frame.

In some embodiments, the first broadcast frame is transmitted by the apparatus in response to a trigger event.

In some embodiments, the apparatus triggers transmission of the first broadcast frame based on the trigger event. That is, in a case where the zero-power device needs to complete time-frequency synchronization and acquire system information, for example, in an item search event, the apparatus may transmit a radio wave to power the zero-power device, and transmit the first broadcast frame and the second broadcast frame to the zero-power device in response to the item search event being triggered. For example, the first broadcast frame is transmitted prior to the second broadcast frame; or the first broadcast frame is transmitted between periodically transmitted second broadcast frames.

In some embodiments, the trigger event includes at least one of:
·an item search event;
·a logistics vehicle arrival event; or
·a warehouse stocktaking event.

For example, in a logistics scenario, the apparatus perceives arrival of a logistics vehicle (for example, through acoustic sensing or motion sensing). When the logistics vehicle arrives, the apparatus initiates a stocktaking process for items (the zero-power device) on the logistics vehicle. In this case, the apparatus may transmit a radio wave to power the zero-power device, and transmit the first broadcast frame and the second broadcast frame to the zero-power device.

Similarly, in a warehousing scenario, when stocktaking is needed for items (the zero-power device) in a warehouse, the apparatus may transmit a radio wave to power the zero-power device, and transmit the first broadcast frame and the second broadcast frame to the zero-power device.

In the foregoing scenarios, through such operations, sufficient broadcast frames can be quickly transmitted to the zero-power device at moments of initiating item search and warehouse stocktaking processes. In this way, the zero-power device quickly completes time-frequency synchronization and acquires system information, thereby accelerating item search and warehouse stocktaking.

In some embodiments, at least one first broadcast frame is transmitted within a first time window. The at least one first broadcast frame further carries indication information of the first time window. In a case where a plurality of first broadcast frames are present within the first time window, all or at least one of the plurality of first broadcast frames carry the indication information of the first time window.

In some embodiments, the first time window is represented as: a window start point + a window length.

In some embodiments, a first time-domain position occupied by the first broadcast frame and a remaining time represent a length of the first time window. That is, all or at least one of the first broadcast frames may carry the remaining time of the first time window. For example, each first broadcast frame except the last first broadcast frame carries the remaining time. A remaining time carried by a first broadcast frame is 1000 ms, indicating that the remaining time of the first time window is 1000 ms starting from a time-domain position of the first broadcast frame.

In some embodiments, a current first broadcast frame carries indication information of a time-domain position of a next first broadcast frame. In a case where the indication information is present, the first time window has not ended and the indication information indicates the time-domain position of the next first broadcast frame. In a case where the indication information is not present, the first time window ends subsequent to the time-domain position of the first broadcast frame.

In some embodiments, the first broadcast frame is transmitted by the apparatus. The apparatus is at least one of a device in a Wi-Fi system or a device in a cellular communication system.

In the embodiments of the present disclosure, the transmitting module 1910 may be split into a plurality of transmitting modules, for example, a first transmitting module and a second transmitting module. The first transmitting module is configured to transmit the first broadcast frame, and the second transmitting module is configured to transmit the second broadcast frame. Alternatively, the first transmitting module is configured to transmit the second broadcast frame, and the second transmitting module is configured to transmit the first broadcast frame. Functions of different transmitting modules are not limited in the embodiments of the present disclosure.

In the embodiments of the present disclosure, one transmitting module 1910 is used as an example for description. A quantity of transmitting modules 1910 is not limited in the present disclosure.

For function descriptions of the transmitting module 1910, reference is made to content of process 1710 in the embodiments in FIG. 17.

FIG. 20 is a schematic structural diagram of a terminal device or network device 2000 according to some embodiments of the present disclosure, including a processor 2001, a receiver 2002, a transmitter 2003, a memory 2004, and a bus 2005.

The processor 2001 includes one or more processing cores. The processor 2001 executes various functional applications and information processing by running a software program and module.

The receiver 2002 and the transmitter 2003 may be implemented as a communication assembly. The communication assembly may be a communication chip. The communication assembly may be referred to as a transceiver. In some embodiments, the receiver 2002 may be configured to implement the function and processes of the foregoing receiving module 1810, and the transmitter 2003 may be configured to implement the function and processes of the foregoing transmitting module 1910.

The memory 2004 is connected to the processor 2001 over the bus 2005.

The memory 2004 may be configured to store at least one instruction. The processor 2001 is configured to execute the at least one instruction to perform various processes in the foregoing method embodiments.

In addition, the memory 2004 may be implemented by any type of volatile or non-volatile storage device or a combination thereof. The volatile or non-volatile storage device includes but is not limited to a magnetic disk or an optical disc, an electrically erasable programmable read-only memory (EEPROM), an erasable programmable read-only memory (EPROM), a static random access memory (SRAM), a read-only memory (ROM), a magnetic memory, a flash memory, or a programmable ROM (PROM).

In some embodiments, the receiver 2002 independently receives a signal/data, or the processor 2001 controls the receiver 2002 to receive a signal/data, or the processor 2001 requests the receiver 2002 to receive a signal/data, or the processor 2001 cooperates with the receiver 2002 to receive a signal/data.

In some embodiments, the transmitter 2003 independently transmits a signal/data, or the processor 2001 controls the transmitter 2003 to transmit a signal/data, or the processor 2001 requests the transmitter 2003 to transmit a signal/data, or the processor 2001 cooperates with the transmitter 2003 to transmit a signal/data.

In some embodiments, a computer-readable storage medium is further provided. The computer-readable storage medium stores at least one program. The at least one program is loaded and run by a processor to perform the method for communicating broadcast frames as described in the foregoing method embodiments.

In some embodiments, a computer program product or computer program is further provided. When running on a processor, the computer program product or computer program causes the zero-power device or network device 2000 to perform the method for communicating broadcast frames as described in the foregoing method embodiments.

Those skilled in the art should understand that all or part of the processes in the above embodiments may be completed by hardware or by relevant hardware instructed by programs. The programs are stored in a computer-readable storage medium, which may be a ROM, a magnetic disk or an optical disk.

Described above are merely optional embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for communicating broadcast frames, performing by a zero-power device, the method comprising:
receiving a first broadcast frame, wherein the first broadcast frame is transmitted at a time-domain position different from that of a periodically transmitted second broadcast frame.

2. The method according to claim 1, wherein the first broadcast frame is transmitted via:
a periodic transmission; or
an aperiodic transmission.

3. The method according to claim 2, wherein the aperiodic transmission comprises at least one of:
a continuous transmission;
a discontinuous transmission; or
a burst transmission.

4. The method according to any one of claims 1 to 3, wherein the first broadcast frame and the second broadcast frame have an identical structure.

5. The method according to any one of claims 1 to 3, wherein the first broadcast frame and the second broadcast frame have different structures.

6. The method according to claim 5, wherein that the first broadcast frame and the second broadcast frame have different structures comprises at least one of the following cases:
the first broadcast frame and the second broadcast frame use different preambles;
a preamble sequence of the first broadcast frame and a preamble sequence of the second broadcast frame differ in length;
a quantity of information types in a data portion of the first broadcast frame is less than or greater than a quantity of information types in a data portion of the second broadcast frame; or
a code rate of a data portion of the first broadcast frame is lower than a code rate of a data portion of the second broadcast frame.

7. The method according to any one of claims 1 to 3, wherein the first broadcast frame and the second broadcast frame are distinguished by at least one of:
a type indicator in an information field;
a preamble; or
a signal information (SIG) field.

8. The method according to any one of claims 1 to 3, wherein the first broadcast frame carries time-domain position information of a next second broadcast frame.

9. The method according to any one of claims 1 to 3, wherein the first broadcast frame is transmitted by a network device in response to a trigger event.

10. The method according to claim 9, wherein the trigger event comprises at least one of:
an item search event;
a logistics vehicle arrival event; or
a warehouse stocktaking event.

11. The method according to any one of claims 1 to 3, wherein the first broadcast frame is transmitted by a network device, wherein the network device is at least one of a device in a wireless fidelity (Wi-Fi) system or a device in a cellular communication system.

12. A method for communicating broadcast frames, performed by a network device, the method comprising:
transmitting a first broadcast frame, wherein the first broadcast frame is transmitted at a time-domain position different from that of a periodically transmitted second broadcast frame.

13. The method according to claim 12, wherein the first broadcast frame is transmitted via:
a periodic transmission; or
an aperiodic transmission.

14. The method according to claim 13, wherein the aperiodic transmission comprises at least one of:
a continuous transmission;
a discontinuous transmission; or
a burst transmission.

15. The method according to any one of claims 12 to 14, wherein the first broadcast frame and the second broadcast frame have an identical structure.

16. The method according to any one of claims 12 to 14, wherein the first broadcast frame and the second broadcast frame have different structures.

17. The method according to claim 16, wherein that the first broadcast frame and the second broadcast frame have different structures comprises at least one of the following cases:
the first broadcast frame and the second broadcast frame use different preambles;
a preamble sequence of the first broadcast frame and a preamble sequence of the second broadcast frame differ in length;
a quantity of information types in a data portion of the first broadcast frame is less than or greater than a quantity of information types in a data portion of the second broadcast frame; or
a code rate of a data portion of the first broadcast frame is lower than a code rate of a data portion of the second broadcast frame.

18. The method according to any one of claims 12 to 14, wherein the first broadcast frame and the second broadcast frame are distinguished by at least one of:
a type indicator in an information field;
a preamble; or
a signal information (SIG) field.

19. The method according to any one of claims 12 to 14, wherein the first broadcast frame carries time-domain position information of a next second broadcast frame.

20. The method according to any one of claims 12 to 14, wherein the first broadcast frame is transmitted by the network device in response to a trigger event.

21. The method according to claim 20, wherein the trigger event comprises at least one of:
an item search event;
a logistics vehicle arrival event; or
a warehouse stocktaking event.

22. The method according to any one of claims 12 to 14, wherein the first broadcast frame is transmitted by the network device, wherein the network device is at least one of a device in a wireless fidelity (Wi-Fi) system or a device in a cellular communication system.

23. An apparatus for communicating broadcast frames, comprising:
a receiving module, configured to receive a first broadcast frame, wherein the first broadcast frame is transmitted at a time-domain position different from that of a periodically transmitted second broadcast frame.

24. An apparatus for communicating broadcast frames, comprising:
a transmitting module, configured to transmit a first broadcast frame, wherein the first broadcast frame is transmitted at a time domain position different from that of a periodically transmitted second broadcast frame.

25. A zero-power device, comprising:
a processor;
a transceiver communicably connected to the processor; and
a memory configured to store one or more instructions executable by the processor;
wherein the processor is configured to load and execute the one or more instructions to perform the method for communicating broadcast frames as defined in any one of claims 1 to 11.

26. A network device, comprising:
a processor;
a transceiver communicably connected to the processor; and
a memory configured to store one or more instructions executable by the processor;
wherein the processor is configured to load and execute the one or more instructions to perform the method for communicating broadcast frames as defined in any one of claims 12 to 22.

27. A computer-readable storage medium, wherein the computer-readable storage medium stores at least one program, wherein the at least one program is loaded and run by a processor to perform the method for communicating broadcast frames as defined in any one of claims 1 to 22.

28. A computer program product, comprising one or more computer instructions, wherein the one or more computer instructions are stored in a computer-readable storage medium, and when loaded from the computer-readable storage medium and executed by a processor, cause the processor to perform the method for communicating broadcast frames as defined in any one of claims 1 to 22.
